# EUROPEAN PATENT SPECIFICATION

(11) **EP 3 536 596 B1**
(45) Date of publication and mention of the grant of the patent: **20.01.2021**
(21) Application number: 19161073.2
(22) Date of filing: 06.03.2019
(51) Int. Cl.: B62M 7/02, B62M 23/02, B60L 50/30, B60L 50/60, H02K 7/02, B62K 11/04, H02K 7/00

(54) **ELECTRIC POWER UNIT AND STRADDLED ELECTRIC VEHICLE**
ELEKTRISCHE ANTRIEBSEINHEIT UND GRÄTSCHSITZELEKTROFAHRZEUG
ENSEMBLE PROPULSIF ÉLECTRIQUE ET VÉHICULE ÉLECTRIQUE À ENFOURCHER

(30) Priority: 08.03.2018 JP 2018041662
(43) Date of publication of application: 11.09.2019
(73) Proprietor: YAMAHA HATSUDOKI KABUSHIKI KAISHA, Iwata-shi, Shizuoka 438-8501 (JP)
(72) Inventor: TOYOTA, Takeshi, Iwata-shi, Shizuoka 438-8501 (JP); ITO, Jin, Iwata-shi, Shizuoka 438-8501 (JP)
(74) Representative: Zimmermann, Tankred Klaus

(56) References cited:
- EP-A2- 3 147 199
- JP-A- 2003 189 539
- US-A1- 2012 296 508

## Description

### TECHNICAL FIELD

The present invention relates to an electric power unit which includes an electric motor and a clutch, and to a straddled electric vehicle.

### BACKGROUND ART

Straddled vehicles are generally small lightweight vehicles. In such a small lightweight straddled vehicle, in some situations, the vehicle may be required to have a high response to operations performed by a rider. For example, as disclosed in Non Patent Literature 1, there are motorcycle trials which are motorcycle competitions where competitors compete in the skill of passing a complicated course with obstructions having large height differences and inclinations while attempting to avoid touching the ground with the feet. It can be understood also from Non Patent Literature 1 that straddled vehicles are required to have reduced weight and to have a high response in some situations.

Further, a straddled vehicle may include an electric power unit. Hereinafter, a straddled vehicle which includes the electric power unit is referred to as "straddled electric vehicle". An example of a straddled electric vehicle is disclosed in Patent Literature 1. The electric power unit of the straddled electric vehicle disclosed in Patent Literature 1 includes an electric motor, a clutch, and an energy storing rotor. The clutch is mounted on the first end portion of an electric motor rotary shaft of the electric motor. The energy storing rotor is mounted on the second end portion of the electric motor rotary shaft of the electric motor. The energy storing rotor rotates together with the electric motor rotary shaft. In such an electric power unit, the rotation of the electric motor rotary shaft is transmitted to the clutch. The energy storing rotor is positioned upstream of the clutch along the rotation transmission path. In the above-mentioned straddled electric vehicle, the energy storing rotor suppresses fluctuations in the number of rotations of the electric motor.

### CITATION LIST

### NON PATENT LITERATURE

[Non Patent Literature 1] MotoBasic, "HONDA MOTORCYCLE TRIALS FACTORY RACER MEDIA LAUNCH DIGEST, COTA 4RT/RTL300R, Toni Bou, Takahisa Fujinami, Jaime Busto, Tomoyuki Ogawa, Toni Bou FUJIGAS", [online], December 14, 2016, MotoBasic, [searched on November 9, 2017], the Internet <https://www.youtube.com/watch?v=vY_SemSSmwg&t=142s>

### PATENT LITERATURE

[Patent Literature 1] Japanese Patent Application Publication No. 2003-189539

### SUMMARY OF INVENTION

### TECHNICAL PROBLEM

A straddled electric vehicle, which includes an electric power unit where an electric motor and an energy storing rotor are disposed upstream of a clutch along a rotation transmission path, is required to have a reduced weight and a high response to operations performed by a rider. In other words, the electric power unit, where the electric motor and the energy storing rotor are disposed upstream of the clutch along the rotation transmission path, is required to have a reduced weight and a high response to operations performed by a rider.

In view of the above, an object of the present invention is to provide an electric power unit where an electric motor and an energy storing rotor are disposed upstream of a clutch along a rotation transmission path, and where a response of the electric power unit to operations performed by a rider can be improved while an increase in weight of the electric power unit is suppressed, and to provide a straddled electric vehicle.

### SOLUTION TO PROBLEM

The present inventors conducted more detailed studies regarding an electric power unit where a response of the electric power unit to operations performed by a rider can be improved while an increase in weight of the electric power unit is suppressed. First, the present inventors considered a method for improving a response of the electric power unit to operations performed by a rider. As a result, the present inventors discovered that increasing a torque which the electric power unit momentarily outputs allows an improvement in a response of the electric power unit to operations performed by a rider.

The present inventors considered a technique where the size of an electric motor of an electric power unit is increased so as to increase a torque which the electric power unit momentarily outputs. However, an increase in size of the electric motor increases the weight of the electric power unit, thus increasing the weight of the straddled electric vehicle.

Next, as a method for increasing a torque which the electric power unit momentarily outputs, the present inventors conducted more detailed studies regarding a method other than increasing the size of the electric motor of the electric power unit. As a result, the present inventors discovered that it is effective to cause the rotational speed boosting mechanism to increase the rotational speed of the energy storing rotor such that the rotational speed of the energy storing rotor becomes higher than the rotational speed of the electric motor rotary shaft. With such a configuration, kinetic energy stored in the energy storing rotor is increased without an increase in weight of the energy storing rotor. As a result, it is possible to increase a torque which is momentarily output to the output shaft from the energy storing rotor via the clutch. Based on the above-mentioned findings, the present inventors discovered that providing the rotational speed boosting mechanism allows an electric power unit to have an improved response to operations performed by a rider while suppressing an increase in weight of the electric power unit.

The present invention adopts the following configurations to solve the above-mentioned problems.

An electric power unit according to a first aspect is an electric power unit used in a straddled electric vehicle, the straddled vehicle including:
a vehicle body;
a drive wheel supported on the vehicle body;
a power source;
the electric power unit including an electric motor which is driven when receiving a supply of power from the power source;
an accelerator operating unit operated by an operator;
an electric motor control unit configured to control the electric motor based on the operation of the accelerator operating unit performed by the operator; and
a clutch operating unit operated by the operator, the electric power unit including:
   the electric motor including an electric motor rotary shaft, and configured to rotate the electric motor rotary shaft responsive to a supply of power from the power source; and
   an energy storing rotor including an energy-storing-rotor rotary shaft and an energy storing rotor body, the energy storing rotor body configured to store kinetic energy by being rotated about the energy-storing-rotor rotary shaft, wherein
the electric power unit further includes:
   a rotational speed boosting mechanism configured to transmit a rotation of the electric motor rotary shaft to the energy storing rotor body to rotate the energy storing rotor body at a rotational speed higher than a rotational speed of the electric motor rotary shaft, a value of a ratio of the rotational speed of the energy storing rotor body to the rotational speed of the electric motor rotary shaft being constant;
   a clutch configured to switch between a transmission state and a shut-off state based on an operation of the clutch operating unit performed by the operator, wherein, in the transmission state, the rotation of the electric motor rotary shaft and the rotation of the energy storing rotor body, which is rotated by the rotational speed boosting mechanism at a rotational speed higher than a rotational speed of the electric motor rotary shaft, are transmitted to an output shaft, and in the shut-off state, the rotation of the electric motor rotary shaft and the rotation of the energy storing rotor body, which is rotated by the rotational speed boosting mechanism at a rotational speed higher than a rotational speed of the electric motor rotary shaft, are prevented from being transmitted to the output shaft; and
   the output shaft configured to rotate the drive wheel, the output shaft being rotated, with the clutch being in the transmission state, by the rotation of the electric motor rotary shaft and the rotation of the energy storing rotor body, which is rotated by the rotational speed boosting mechanism at a rotational speed higher than a rotational speed of the electric motor rotary shaft.

According to the electric power unit of the first aspect, it is possible to improve a response of the electric power unit to operations performed by a rider. To be more specific, the electric power unit includes the clutch which is configured to switch between the transmission state and the shut-off state based on an operation of the clutch operating unit performed by the operator: in the transmission state, the rotation of the electric motor rotary shaft and the rotation of the energy storing rotor body are transmitted to the output shaft, and in the shut-off state, the rotation of the electric motor rotary shaft and the rotation of the energy storing rotor body are prevented from being transmitted to the output shaft. The operator operates the accelerator operating unit to drive the electric motor while maintaining the clutch in the shut-off state by operating the clutch operating unit. With such operations, the energy storing rotor body is rotated by the rotational speed boosting mechanism at a rotational speed higher than the rotational speed of the electric motor rotary shaft of the electric motor. However, the clutch is in the shut-off state and hence, the rotation of the electric motor rotary shaft is not transmitted to the output shaft which rotates the drive wheel. Accordingly, high kinetic energy is stored in the energy storing rotor body in a state in which the electric vehicle is in a stopped state. After sufficient kinetic energy is stored, the operator switches the clutch from the shut-off state to the transmission state by operating the clutch operating unit. With such switching, the rotation of the energy storing rotor body and the rotation of the electric motor rotary shaft are transmitted to the output shaft via the clutch. Accordingly, the electric power unit momentarily outputs a large torque from the output shaft. As a result, according to the electric power unit of the first aspect, it is possible to improve a response of the electric power unit to operations performed by a rider.

According to the electric power unit of the first aspect, it is possible to suppress an increase in weight of the electric power unit. To be more specific, in the electric power unit of the first aspect, the rotational speed boosting mechanism rotates the energy storing rotor body at a rotational speed higher than the rotational speed of the electric motor rotary shaft of the electric motor. With such a configuration, high kinetic energy is stored in the energy storing rotor body. The high kinetic energy stored in the energy storing rotor body is output to the output shaft via the clutch. Accordingly, a large torque is momentarily output to the output shaft. Therefore, it is not always necessary to increase the size of the electric motor in order to increase a torque which the electric power unit momentarily outputs. As a result, according to the electric power unit of the first aspect, it is possible to suppress an increase in weight of the electric power unit.

According to the electric power unit of the first aspect, it is also possible to suppress an increase in weight of the electric power unit for the following reason. In the electric power unit, the rotational speed boosting mechanism rotates the energy storing rotor body at a rotational speed higher than the rotational speed of the electric motor rotary shaft of the electric motor. Accordingly, high kinetic energy is stored in the energy storing rotor body. With such a configuration, even when the energy storing rotor body has a small weight, the energy storing rotor body can store sufficient kinetic energy. As a result, it is possible to suppress an increase in weight of the electric power unit of the first aspect.

The electric power unit according to a second aspect further includes, in the electric power unit according to the first aspect, a speed reduction mechanism configured to transmit a rotation to the output shaft from the electric motor rotary shaft while reducing a rotational speed such that a rotational speed of the output shaft falls below a rotational speed of the electric motor rotary shaft, and configured to transmit a rotation to the output shaft from the energy-storing-rotor rotary shaft while reducing a rotational speed such that the rotational speed of the output shaft falls below a rotational speed of the energy-storing-rotor rotary shaft.

The electric power unit according to a third aspect is, in the electric power unit according to the first aspect or the second aspect, configured such that
neither the energy storing rotor nor the rotational speed boosting mechanism is positioned on a rotation transmission path which couples the electric motor and the clutch with each other.

According to the electric power unit of the third aspect, the energy storing rotor and the rotational speed boosting mechanism are disposed at a position not between the electric motor and the clutch.

The electric power unit according to a fourth aspect is, in the electric power unit according to the third aspect, configured such that
the energy-storing-rotor rotary shaft and the electric motor rotary shaft extend in a first direction, and
the energy-storing-rotor rotary shaft and the electric motor rotary shaft do not overlap with each other as viewed in the first direction.

According to the electric power unit of the fourth aspect, the energy-storing-rotor rotary shaft and the electric motor rotary shaft are not aligned on the same axis. With such a configuration, as viewed in the direction orthogonal to the first direction, a portion of the energy-storing-rotor rotary shaft and a portion of the electric motor rotary shaft can overlap with each other. Accordingly, it is possible to reduce a distance in the first direction between the energy storing rotor and the electric motor. As a result, the size of the electric power unit according to the fourth aspect in the first direction is reduced.

The electric power unit according to a fifth aspect is, in the electric power unit according to the fourth aspect, configured such that
the clutch includes a clutch rotary shaft extending in the first direction and a clutch plate,
the clutch plate is rotated together with the clutch rotary shaft with the clutch being in the transmission state, and the clutch plate is prevented from being rotated with the clutch being in the shut-off state, and
the energy-storing-rotor rotary shaft, the electric motor rotary shaft, and the clutch rotary shaft are, as viewed in the first direction, arranged in this order in a second direction which is orthogonal to the first direction.

According to the electric power unit of the fifth aspect, the energy-storing-rotor rotary shaft, the electric motor rotary shaft, and the clutch rotary shaft are, as viewed in the first direction, arranged in this order in the second direction which is orthogonal to the first direction. Accordingly, the energy-storing-rotor rotary shaft is disposed at a position not between the electric motor and the clutch, thus allowing the electric motor and the clutch to be positioned close to each other. As a result, the size of the electric power unit according to the fifth aspect in the second direction is reduced.

The electric power unit according to a sixth aspect is, in the electric power unit according to any one of the first to fifth aspects, configured such that
the energy-storing-rotor rotary shaft and the electric motor rotary shaft extend in the first direction, and
a rotational direction of the electric motor rotary shaft is opposite to a rotational direction of the energy storing rotor body.

According to the electric power unit of the sixth aspect, the rotational direction of the electric motor rotary shaft is opposite to the rotational direction of the energy storing rotor body and hence, the direction of the angular momentum of the electric motor rotary shaft is opposite to the direction of the angular momentum of the energy storing rotor body. As a result, an angular momentum generated in the electric power unit according to the sixth aspect is reduced.

The electric power unit according to a seventh aspect is, in the electric power unit according to any one of the fourth to sixth aspects, configured such that
the first direction is a vehicle-body left-right direction.

In the case in which the electric power unit according to the seventh aspect has the structure of the electric power unit according to the fourth and fifth aspects, the size of the electric vehicle in the vehicle-body left-right direction is reduced. Further, in the case in which the electric power unit according to the seventh aspect has the structure of the electric power unit according to the sixth aspect, an angular momentum of the electric vehicle in the vehicle-body left-right direction is reduced.

The electric power unit according to an eighth aspect is, in the electric power unit according to any one of the first to seventh aspects, configured such that
the electric motor further includes: a rotor which is supported on the electric motor rotary shaft, and which rotates together with the electric motor rotary shaft; and an electric motor body which accommodates the rotor,
the electric motor rotary shaft includes a first protruding portion which protrudes from the electric motor body, and
the clutch and the rotational speed boosting mechanism are connected to the first protruding portion.

According to the electric power unit of the eighth aspect, the clutch and the rotational speed boosting mechanism are connected to the electric motor rotary shaft at the first protruding portion. Accordingly, the clutch and the rotational speed boosting mechanism are positioned in the same direction with respect to the electric motor in a direction along which the electric motor rotary shaft extends.

The electric power unit according to a ninth aspect is, in the electric power unit of the first aspect, configured such that
the electric motor further includes: a rotor which is supported on the electric motor rotary shaft, and which rotates together with the electric motor rotary shaft; and an electric motor body which accommodates the rotor,
the electric motor rotary shaft includes a first protruding portion and a second protruding portion which protrude from the electric motor body,
the electric motor rotary shaft has a first end and a second end,
the first protruding portion includes the first end,
the second protruding portion includes the second end,
the rotational speed boosting mechanism is connected to the second protruding portion, and
the clutch is connected to the first protruding portion.

According to the electric power unit of the ninth aspect, the clutch is connected to the electric motor rotary shaft at the first protruding portion. Further, the rotational speed boosting mechanism is connected to the electric motor rotary shaft at the second protruding portion. Accordingly, the electric motor is positioned between the clutch and the rotational speed boosting mechanism in the direction along which the electric motor rotary shaft extends.

An electric vehicle according to a tenth aspect includes:
the electric power unit according to any one of the first to ninth aspects;
a vehicle body;
the drive wheel supported on the vehicle body;
the power source;
the accelerator operating unit configured to be operated by the operator;
the electric motor control unit configured to control the electric motor based on the operation of the accelerator operating unit performed by the operator; and
the clutch operating unit configured to be operated by the operator.

According to the electric vehicle of the tenth aspect, for the same reason as the electric power unit according to the first aspect, it is possible to improve a response of the electric power unit to operations performed by a rider. Further, according to the electric vehicle of the tenth aspect, for the same reason as the electric power unit according to the first aspect, it is possible to suppress an increase in weight of the electric power unit and the electric vehicle.

The foregoing and other purposes, features, aspects and advantages of the invention will become further apparent from the following detailed description of embodiments of the invention given with reference to the accompanying drawings.

As used in this specification, the term "and/or" includes any and all combinations of one or a plurality of the associated listed items.

As used in this specification, the terms "including," "comprising" or "having" and variations thereof specify the presence of stated features, steps, operations, elements, components, and/or their equivalents, but do not preclude one or a plurality of stated features, steps, operations, elements, components, and/or groups thereof.

Unless otherwise defined, all terms (including technical and scientific terms) used in this specification have the same meaning as commonly understood by one skilled in the art to which the present invention belongs.

Terms, such as those defined in commonly used dictionaries, should be interpreted as having a meaning that is consistent with their meaning in the context of the relevant art and the present disclosure and will not be interpreted in an idealized or overly formal sense unless expressly so defined in this specification.

In describing the invention, it will be understood that a number of techniques and steps are disclosed. Each of these has individual benefit and each can also be used in conjunction with one or more, or in some cases all, of the other disclosed techniques. Accordingly, for the sake of clarity, this description will refrain from repeating every possible combination of the individual steps in an unnecessary fashion. Nevertheless, the specification and claims should be read with the understanding that such combinations are entirely within the scope of the invention and the claims.

In the following description, for purposes of explanation, numerous specific details are set forth in order to provide a thorough understanding of the present invention. It will be evident, however, to one skilled in the art that the present invention may be practiced without these specific details. The present disclosure is to be considered as an exemplification of the invention, and is not intended to limit the invention to the specific embodiments illustrated by the figures or description below.

### ADVANTAGEOUS EFFECTS OF INVENTION

The present invention can improve controllability of an electric vehicle while an increase in weight of the electric power unit is suppressed.

### BRIEF DESCRIPTION OF DRAWINGS

[FIG. 1] FIG. 1 is a view of a straddled electric vehicle 1 as viewed in the straddled-electric-vehicle 1 backward and rightward directions, and is also a cross-sectional view of an electric power unit 8 taken along plane parallel to the straddled-electric-vehicle 1 front-back and left-right directions.
[FIG. 2] FIG. 2 is an external appearance perspective view of the electric power unit 8.
[FIG. 3] FIG. 3 is a view showing the electric power unit 8 in a see-through manner as viewed in the straddled-electric-vehicle 1 rightward direction.
[FIG. 4] FIG. 4 is a cross-sectional view of an electric power unit 8a taken along plane parallel to the front-back direction fb and the left-right direction lr.
[FIG. 5] FIG. 5 is a view showing the electric power unit 8a in a see-through manner as viewed in the rightward direction r.
[FIG. 6] FIG. 6 is a schematic view of an electric power unit 8b as viewed in the downward direction d.
[FIG. 7] FIG. 7 is a schematic view of an electric power unit 8c as viewed in the downward direction d.
[FIG. 8] FIG. 8 is a schematic view of an electric power unit 8d as viewed in the downward direction d.
[FIG. 9] FIG. 9 is a schematic view of an electric power unit 8e as viewed in the downward direction d.
[FIG. 10] FIG. 10 is a schematic view of an electric power unit 8f as viewed in the downward direction d.

### DESCRIPTION OF EMBODIMENTS

### (Embodiment)

### [Overall configuration]

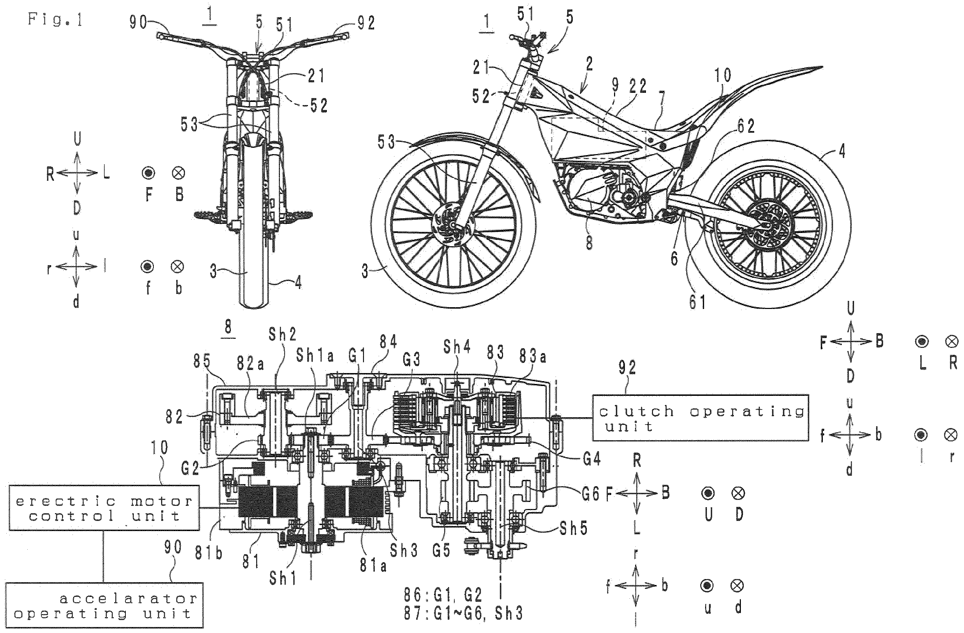

Hereinafter, an overall configuration of a straddled electric vehicle 1 according to one embodiment is described with reference to drawings. In this embodiment, a two-wheeled electric vehicle (hereinafter referred to as "electric vehicle") including a vehicle body which can lean, one front wheel, and one rear wheel is given as one example of the electric vehicle. The electric vehicle is a vehicle for motorcycle trials. FIG. 1 is a view of the straddled electric vehicle 1 as viewed in the straddled-electric-vehicle 1 backward and rightward directions, and is also a cross-sectional view of an electric power unit 8 taken along plane parallel to the straddled-electric-vehicle 1 front-back and left-right directions.

Hereinafter, the straddled-electric-vehicle 1 frontward direction is referred to as the frontward direction "F". The straddled-electric-vehicle 1 backward direction is referred to as the backward direction "B". The straddled-electric-vehicle 1 leftward direction is referred to as the leftward direction "L". The straddled-electric-vehicle 1 rightward direction is referred to as the rightward direction "R". The straddled-electric-vehicle 1 upward direction is referred to as the upward direction "U". The straddled-electric-vehicle 1 downward direction is referred to as the downward direction "D". The straddled-electric-vehicle 1 front-back direction is referred to as the front-back direction "FB". The straddled-electric-vehicle 1 left-right direction is referred to as the left-right direction "LR". The straddled-electric-vehicle 1 up-down direction is referred to as the up-down direction "UD". The straddled-electric-vehicle 1 frontward direction refers to the frontward direction when taking an operator who straddles the straddled electric vehicle 1 as a reference. The straddled-electric-vehicle 1 backward direction refers to the backward direction when taking an operator who straddles the straddled electric vehicle 1 as a reference. The straddled-electric-vehicle 1 leftward direction refers to the left when taking an operator who straddles the straddled electric vehicle 1 as a reference. The straddled-electric-vehicle 1 rightward direction refers to the right when taking an operator who straddles the straddled electric vehicle 1 as a reference. The straddled-electric-vehicle 1 upward direction refers to the upward direction when taking an operator who straddles the straddled electric vehicle 1 as a reference. The straddled-electric-vehicle 1 downward direction refers to the downward direction when taking an operator who straddles the straddled electric vehicle 1 as a reference.

Further, in the straddled electric vehicle 1, a vehicle body 2 can lean in the leftward direction L or in the rightward direction R. In a case where the vehicle body 2 leans in the leftward direction L or in the rightward direction R, the vehicle-body 2 up-down direction and the vehicle-body 2 left-right direction do not match the straddled-electric-vehicle 1 up-down direction UD and the straddled-electric-vehicle 1 left-right direction LR, respectively. On the other hand, the vehicle-body 2 up-down direction and the vehicle-body 2 left-right direction in a state in which the vehicle body 2 is upright match the straddled-electric-vehicle 1 up-down direction UD and the straddled-electric-vehicle 1 left-right direction LR, respectively. Hereinafter, the vehicle-body 2 frontward direction is referred to as the frontward direction "f". The vehicle-body 2 backward direction is referred to as the backward direction "b". The vehicle-body 2 leftward direction is referred to as the leftward direction "l". The vehicle-body 2 rightward direction is referred to as the rightward direction "r". The vehicle-body 2 upward direction is referred to as the upward direction "u". The vehicle-body 2 downward direction is referred to as the downward direction "d". The vehicle-body 2 front-back direction is referred to as the front-back direction "fb". The vehicle-body 2 left-right direction is referred to as the left-right direction "lr". The vehicle-body 2 up-down direction is referred to as the up-down direction "ud".

In this specification, an axis or a member extending in the front-back direction does not necessarily refer to only an axis or a member that is parallel to the front-back direction. An axis or a member extending in the front-back direction refers to an axis or a member that is inclined within a range of ±45° with respect to the front-back direction. Similarly, an axis or a member extending in the up-down direction refers to an axis or a member that is inclined within a range of ±45° with respect to the up-down direction. An axis or a member extending in the left-right direction refers to an axis or a member that is inclined within a range of ±45° with respect to the left-right direction. Further, the term "state in which the vehicle body 2 is upright" means a state in which the front wheel is not steering or leaning, in a state in which an operator is not riding on the straddled electric vehicle 1 and there is no fuel in the straddled electric vehicle 1.

In this specification, a state in which a first member is supported on a second member includes a state in which the first member is mounted on the second member in a non-movable manner with respect to the second member (that is, the first member is fixed to the second member), and a state in which the first member is mounted on the second member in a movable manner with respect to the second member. Further, a state in which the first member is supported on the second member includes both a state in which the first member is directly mounted on the second member, and a state in which the first member is mounted on the second member via a third member.

In this specification, the first member and the second member arranged in the front-back direction refer to the first member and the second member being in the following state. When the first member and the second member are viewed in the direction perpendicular to the front-back direction, both the first member and the second member are disposed on an arbitrary straight line indicating the front-back direction. In this specification, the first member and the second member arranged in the front-back direction as viewed in the up-down direction refer to the first member and the second member being in the following state. When the first member and the second member are viewed in the up-down direction, both the first member and the second member are disposed on an arbitrary straight line indicating the front-back direction. In this case, when the first member and the second member are viewed in the left-right direction which is different from the up-down direction, either one of the first member or the second member may not be disposed on the arbitrary straight line indicating the front-back direction. The first member and the second member may be in contact with each other. The first member and the second member may be separated from each other. The third member may be disposed between the first member and the second member. This definition is also applicable to other directions in addition to the front-back direction.

In this specification, a state in which the first member is disposed in front of the second member refers to the following state. At least a portion of the first member is disposed in a region where the second member passes when the second member moves forward parallel to the frontward direction. Accordingly, the first member may fall within the range where the second member passes when the second member moves forward parallel to the frontward direction, or the first member may protrude from the region where the second member passes when the second member moves forward parallel to the frontward direction. In this case, the first member and the second member are arranged in the front-back direction. This definition is also applicable to other directions in addition to the front-back direction.

In the present specification, the phrase the first member is disposed in front of the second member as seen in the left-right direction refers to the following state. The first member and the second member are arranged in the front-back direction as seen in the left-right direction, and a part of the first member opposed to the second member is disposed in front of the second member as seen in the left-right direction. In this definition, the first member and the second member may not be arranged in the front-back direction in a three dimensional space. This definition is also applicable to other directions in addition to the front-back direction.

In this specification, a state in which the first member is disposed further forward than the second member refers to the following state. The first member is disposed in front of a plane which passes through the front end of the second member, and which is orthogonal to the front-back direction. In this case, the first member and the second member may be or may not be arranged in the front-back direction. This definition is also applicable to other directions in addition to the front-back direction.

In this specification, unless otherwise specified, respective portions of the first member are defined as follows. The front portion of the first member means the front half of the first member. The rear portion of the first member means the rear half of the first member. The left portion of the first member means the left half of the first member. The right portion of the first member means the right half of the first member. The upper portion of the first member means the upper half of the first member. The lower portion of the first member means the lower half of the first member. The upper end of the first member means the end of the first member in the upward direction. The lower end of the first member means the end of the first member in the downward direction. The front end of the first member means the end of the first member in the frontward direction. The rear end of the first member means the end of the first member in the backward direction. The right end of the first member means the end of the first member in the rightward direction. The left end of the first member means the end of the first member in the leftward direction. The upper end portion of the first member means the upper end and an area in the vicinity of the upper end of the first member. The lower end portion of the first member means the lower end and an area in the vicinity of the lower end of the first member. The front end portion of the first member means the front end and an area in the vicinity of the front end of the first member. The rear end portion of the first member means the rear end and an area in the vicinity of the rear end of the first member. The left end portion of the first member means the left end and an area in the vicinity of the left end of the first member. The right end portion of the first member means the right end and an area in the vicinity of the right end of the first member. The first member means a member forming the straddled electric vehicle 1.

As shown in FIG. 1, the straddled electric vehicle 1 includes the vehicle body 2, a front wheel 3, a rear wheel 4, a steering mechanism 5, a suspension 6, a seat 7, an electric power unit 8, a battery 9, an electric motor control unit 10, an accelerator operating unit 90, and a clutch operating unit 92. The vehicle body 2 leans in the leftward direction L when turning in the leftward direction L. The vehicle body 2 leans in the rightward direction R when turning in the rightward direction R. The vehicle body 2 includes a head pipe 21 and a main frame 22. The head pipe 21 forms the front end portion of the vehicle body 2. The head pipe 21 has a cylindrical shape with the center axis extending in the up-down direction ud. The head pipe 21 is disposed so as to be slightly inclined with respect to the up-down direction ud as viewed in the leftward direction 1 or the rightward direction r such that the upper end portion of the head pipe 21 is positioned further backward b than the lower end portion of the head pipe 21.

The main frame 22 is disposed behind the head pipe 21 in the backward direction b as viewed in the leftward direction 1 or the rightward direction r. The main frame 22 has a box shape extending in the front-back direction fb.

The battery 9 is the power source of the straddled electric vehicle 1. The battery 9 is formed of a secondary battery, and the battery 9 may be a lithium ion battery, for example. The battery 9 has a rectangular parallelepiped shape. The battery 9 is accommodated in the main frame 22.

The electric power unit 8 generates a torque for rotating the rear wheel 4 described later when receiving a supply of power from the battery 9. The electric power unit 8 is supported on the vehicle body 2. To be more specific, the electric power unit 8 is disposed below the main frame 22 in the downward direction d. Further, the electric power unit 8 is supported on the lower surface of the main frame 22. With such a configuration, the electric power unit 8 is positioned below the battery 9 in the downward direction d. The electric power unit 8 is described later in detail.

The steering mechanism 5 is disposed around the head pipe 21. The steering mechanism 5 steers the front wheel 3 when the steering mechanism 5 is operated by an operator. The steering mechanism 5 includes a handlebar 51, a steering shaft 52, and front forks 53. The handlebar 51 is operated by an operator. The steering shaft 52 is inserted into the head pipe 21. With such a configuration, the steering shaft 52 is supported by the vehicle body 2 such that the steering shaft 52 is rotatable about the center axis of the steering shaft 52 when the handlebar 51 is operated by an operator.

The front forks 53 are fixed to the lower end of the steering shaft 52. The front forks 53 have the structure where the front fork is branched in the leftward direction 1 and in the rightward direction r as viewed in the backward direction b. The front wheel 3 is supported on the lower end portions of the front forks 53 such that the front wheel 3 is rotatable about the front axle. With such a configuration, an operator can steer the front wheel 3 by operating the handlebar 51.

The suspension 6 is supported on the vehicle body 2 and, at the same time, supports the rear wheel 4. The suspension 6 includes a swing arm 61 and a shock absorber 62. As viewed in the rightward direction r, the swing arm 61 extends in the backward direction b from a lower rear portion of the main frame 22. The swing arm 61 is supported on the main frame 22 such that the swing arm 61 can oscillate about an axis which passes through the front end portion of the swing arm 61 in the left-right direction lr. With such a configuration, the rear end portion of the swing arm 61 can move in the up-down direction ud with respect to the main frame 22.

The rear wheel 4 is a drive wheel of the straddled electric vehicle 1. Accordingly, the rear wheel 4 is rotated by the torque of the electric power unit 8. The rear wheel 4 is supported on the vehicle body 2 via the swing arm 61. To be more specific, the rear wheel 4 is supported on the rear end portions of the swing arm 61 such that the rear wheel 4 is rotatable about a rear axle. With such a configuration, the rear wheel 4 can move in the up-down direction ud with respect to the main frame 22 when the swing arm 61 oscillates.

The shock absorber 62 is formed of a combination of a damper and a spring so that the shock absorber 62 can extend and retract in the up-down direction ud. The upper end portion of the shock absorber 62 is supported on the main frame 22. The lower end portion of the shock absorber 62 is supported on the swing arm 61. The shock absorber 62 reduces the oscillation of the swing arm 61 with respect to the main frame 22, thus reducing the movement of the rear wheel 4 in the up-down direction ud with respect to the main frame 22.

An operator sits on the seat 7. The seat 7 is supported on the rear portion of the main frame 22.

The accelerator operating unit 90 is operated by an operator. The accelerator operating unit 90 includes a right grip and a throttle sensor. The right grip is rotatably mounted on the right portion of the handlebar 51. The right grip is rotated about the center axis of the right portion of the handlebar 51 with the operation performed by an operator. The position of the right grip in a state in which an operator is not in contact with the right grip is defined as the initial position. The throttle sensor detects the rotation angle of the right grip from the initial position (hereinafter simply referred to as the rotation angle of the right grip). The throttle sensor outputs a throttle signal indicating the rotation angle of the right grip.

The electric motor control unit 10 controls an electric motor 81 of the electric power unit 8 (described later in detail) based on the operation of the accelerator operating unit 90 performed by an operator. To be more specific, the electric motor control unit 10 determines an electric current to be supplied to the electric motor 81 based on a throttle signal output from the throttle sensor. The electric motor control unit 10 increases an electric current supplied to the electric motor 81 from the battery 9 with an increase in the rotation angle of the right grip indicated by the throttle signal. The electric motor control unit 10 is provided to the rear portion of the main frame 22.

The clutch operating unit 92 is operated by an operator. The clutch operating unit 92 is formed of a lever and a clutch wire. The lever is provided to the left portion of the handlebar 51. The clutch wire is coupled to the lever and a clutch 83. The clutch wire transmits an operation of the lever to the clutch 83. With the operation performed by an operator, the clutch operating unit 92 can be switched between a state in which the clutch operating unit 92 approaches the left portion of the handlebar 51 (shut-off state) and a state in which the clutch operating unit 92 is separated from the left portion of the handlebar 51 (transmission state). When an operator operates the clutch operating unit 92 into the transmission state, the clutch 83 of the electric power unit 8 (described later in detail) is brought into the transmission state. When an operator operates the clutch operating unit 92 into the shut-off state, the clutch 83 of the electric power unit 8 is brought into the shut-off state. The clutch operating unit 92 may be formed of a so-called drive-by-wire device. In other words, the clutch operating unit 92 may be formed of a combination of an electric switch and an actuator. In this case, when an operator operates the electric switch, the actuator switches the clutch 83 of the electric power unit 8 between a transmission state and a shut-off state.

### [Configuration of electric power unit]

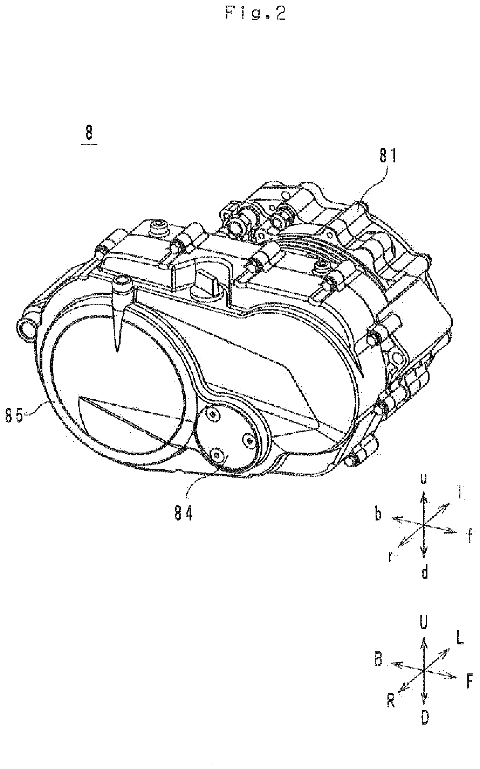

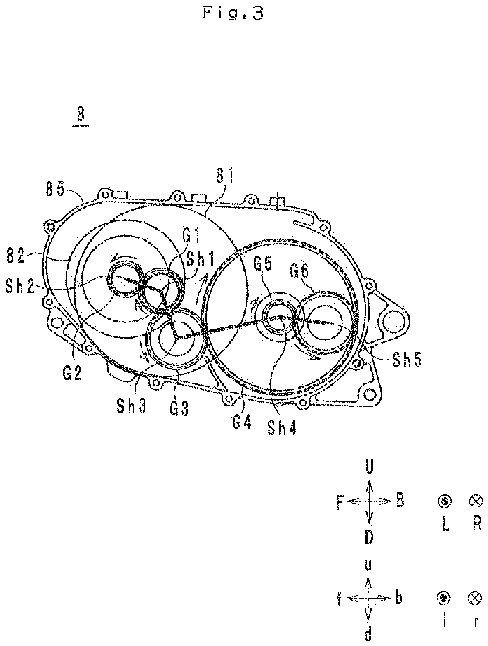

Next, the electric power unit 8 is described with reference to drawings. FIG. 2 is an external appearance perspective view of the electric power unit 8. FIG. 3 is a view showing the electric power unit 8 in a see-through manner as viewed in the straddled-electric-vehicle 1 rightward direction.

As shown in FIG. 1, the electric power unit 8 includes the electric motor 81, an energy storing rotor 82, the clutch 83, a one-way clutch 84, a casing 85, a rotational speed boosting mechanism 86, a speed reduction mechanism 87, and an output shaft Sh5. The casing 85 is a housing which accommodates the energy storing rotor 82, the clutch 83, the one-way clutch 84, the rotational speed boosting mechanism 86, the speed reduction mechanism 87, and the output shaft Sh5.

The electric motor 81 is driven when receiving a supply of power from the battery 9. To be more specific, the electric motor 81 includes a rotor 81a, an electric motor body 81b and an electric motor rotary shaft Sh1. The electric motor rotary shaft Sh1 extends in the left-right direction lr (one example of the first direction). The rotor 81a is supported on the electric motor rotary shaft Sh1, and rotates together with the electric motor rotary shaft Sh1. The electric motor body 81b is a casing which accommodates the rotor 81a. The electric motor rotary shaft Sh1 includes a protruding portion Sh1a which protrudes in the rightward direction r from the electric motor body 81b.

The electric motor 81 is driven by the electric motor control unit 10 when receiving a supply of an electric current from the battery 9. Accordingly, as shown in FIG. 3, the electric motor 81 rotates the rotor 81a (see FIG. 1) and the electric motor rotary shaft Sh1 in the clockwise direction as viewed in the rightward direction r. The electric motor 81 rotates the electric motor rotary shaft Sh1 such that the rotational speed of the electric motor rotary shaft Sh1 increases with a larger electric current supplied from the battery 9. As shown in FIG. 2, the electric motor 81 is fixed to the left surface of the casing 85.

The speed reduction mechanism 87 transmits a rotation to the output shaft Sh5 from the electric motor rotary shaft Sh1 while reducing a rotational speed such that the rotational speed of the output shaft Sh5 falls below the rotational speed of the electric motor rotary shaft Sh1. However, in a process where a rotation is transmitted to the output shaft Sh5 from the electric motor rotary shaft Sh1, a rotational speed may be increased temporarily. In other words, it is sufficient that the rotational speed of the output shaft Sh5 is smaller than the rotational speed of the electric motor rotary shaft Sh1. Further, the speed reduction mechanism 87 transmits a rotation to the output shaft Sh5 from an energy-storing-rotor rotary shaft Sh2 while reducing a rotational speed such that the rotational speed of the output shaft Sh5 falls below the rotational speed of the energy-storing-rotor rotary shaft Sh2 (described later). However, in a process where a rotation is transmitted to the output shaft Sh5 from the energy-storing-rotor rotary shaft Sh2, a rotational speed may be increased temporarily. In other words, it is sufficient that the rotational speed of the output shaft Sh5 is smaller than the rotational speed of the energy-storing-rotor rotary shaft Sh2. The speed reduction mechanism 87 includes gears G1 to G6 and a shaft Sh3.

The rotational speed boosting mechanism 86 transmits the rotation of the electric motor rotary shaft Sh1 to an energy storing rotor body 82a (described later) to rotate the energy storing rotor body 82a at a rotational speed higher than the rotational speed of the electric motor rotary shaft Sh1. The rotational speed boosting mechanism 86 includes the gears G1, G2.

The gear G1 is fixed to the right end portion of the electric motor rotary shaft Sh1 (that is, the protruding portion Sh1a). With such a configuration, the gear G1 rotates together with the electric motor rotary shaft Sh1.

The energy storing rotor 82 is disposed to the right of the electric motor 81 in the rightward direction r. The energy storing rotor 82 includes the energy storing rotor body 82a and the energy-storing-rotor rotary shaft Sh2. The energy storing rotor body 82a stores kinetic energy by being rotated about the energy-storing-rotor rotary shaft Sh2. The energy storing rotor body 82a is a disc-shaped plate having a main surface perpendicular to the left-right direction lr. The energy-storing-rotor rotary shaft Sh2 passes through the center of the energy storing rotor body 82a, and extends in the left-right direction lr. The energy-storing-rotor rotary shaft Sh2 is disposed in front of the electric motor rotary shaft Sh1 in the forward direction f. Accordingly, the energy-storing-rotor rotary shaft Sh2 and the electric motor rotary shaft Sh1 do not overlap with each other as viewed in the leftward direction 1 or the rightward direction r.

The gear G2 is fixed to the left portion of the energy-storing-rotor rotary shaft Sh2. With such a configuration, the gear G2 rotates together with the energy-storing-rotor rotary shaft Sh2. Further, as shown in FIG. 3, the gear G2 meshes with the gear G1. Accordingly, the gear G2 is rotated by the gear G1. The number of teeth of the gear G2 is smaller than the number of teeth of the gear G1. Accordingly, the rotational speed of the energy-storing-rotor rotary shaft Sh2 becomes higher than the rotational speed of the electric motor rotary shaft Sh1. However, as viewed in the leftward direction 1 or the rightward direction r, the rotational direction of the energy-storing-rotor rotary shaft Sh2 is opposite to the rotational direction of the electric motor rotary shaft Sh1. Accordingly, as viewed in the rightward direction r, the energy-storing-rotor rotary shaft Sh2 is rotated in the counterclockwise direction. As described above, the gears G1, G2 function as the rotational speed boosting mechanism 86. The rotational speed boosting mechanism 86 is connected to the protruding portion Sh1a. Further, the rotational speed boosting mechanism 86 does not have a transmission function to change the value of the ratio of the rotational speed of the energy storing rotor body 82a to the rotational speed of the electric motor rotary shaft Sh1. Accordingly, the value of the ratio of the rotational speed of the energy storing rotor body 82a to the rotational speed of the electric motor rotary shaft Sh1 is constant.

The shaft Sh3 extends in the left-right direction lr. The shaft Sh3 is disposed behind the electric motor rotary shaft Sh1 in the backward direction b.

The gear G3 is fixed to the shaft Sh3. With such a configuration, the gear G3 rotates together with the shaft Sh3. Further, as shown in FIG. 3, the gear G3 meshes with the gear G1. Accordingly, the gear G3 is rotated by the gear G1. However, as viewed in the leftward direction 1 or the rightward direction r, the rotational direction of the shaft Sh3 is opposite to the rotational direction of the electric motor rotary shaft Sh1. Accordingly, as viewed in the rightward direction r, the shaft Sh3 is rotated in the counterclockwise direction.

The clutch 83 is disposed behind and to the right of the electric motor 81 in the backward direction b and in the rightward direction r. The clutch 83 includes a clutch rotary shaft Sh4. The clutch rotary shaft Sh4 extends in the left-right direction lr. The clutch rotary shaft Sh4 is disposed behind the shaft Sh3 in the backward direction b.

The gear G4 is fixed to the right portion of the clutch rotary shaft Sh4. With such a configuration, the gear G4 rotates together with the clutch rotary shaft Sh4. Further, as shown in FIG. 3, the gear G4 meshes with the gear G3. Accordingly, the gear G4 is rotated by the gear G3. However, as viewed in the leftward direction 1 or the rightward direction r, the rotational direction of the clutch rotary shaft Sh4 is opposite to the rotational direction of the shaft Sh3. Accordingly, the rotational direction of the clutch rotary shaft Sh4 is equal to the rotational direction of the electric motor rotary shaft Sh1. Therefore, as viewed in the rightward direction r, the clutch rotary shaft Sh4 is rotated in the clockwise direction. Further, the clutch 83 is connected to the protruding portion Sh1a via the gears G1, G3, G4.

The gear G5 is fixed to the left portion of the clutch rotary shaft Sh4. With such a configuration, the gear G5 rotates together with the clutch rotary shaft Sh4.

The output shaft Sh5 extends in the left-right direction lr. The output shaft Sh5 is disposed behind the clutch rotary shaft Sh4 in the backward direction b.

The gear G6 is fixed to the right portion of the output shaft Sh5. With such a configuration, the gear G6 rotates together with the output shaft Sh5. Further, as shown in FIG. 3, the gear G6 meshes with the gear G5. Accordingly, the gear G6 is rotated by the gear G5. However, as viewed in the leftward direction 1 or the rightward direction r, the rotational direction of the output shaft Sh5 is opposite to the rotational direction of the clutch rotary shaft Sh4. Accordingly, as viewed in the rightward direction r, the output shaft Sh5 is rotated in the counterclockwise direction. As described above, the gears G1 to G6 and the shaft Sh3 function as the speed reduction mechanism 87. Therefore, the number of teeth of each of the gears G1 to G6 is set such that the rotational speed of the output shaft Sh5 falls below the rotational speed of the electric motor rotary shaft Sh1, and the rotational speed of the output shaft Sh5 falls below the rotational speed of the energy-storing-rotor rotary shaft Sh2.

The clutch 83 switches between the transmission state and the shut-off state based on the operation of the clutch operating unit 92 performed by an operator. The transmission state is a state in which the rotation of the electric motor rotary shaft Sh1 and the rotation of the energy storing rotor body 82a, which is rotated by the rotational speed boosting mechanism 86 at a rotational speed higher than the rotational speed of the electric motor rotary shaft Sh1, are transmitted to the output shaft Sh5 via the gear G3, the shaft Sh3, the gear G4, the clutch rotary shaft Sh4, and the gears G5, G6. The shut-off state is a state in which the rotation of the electric motor rotary shaft Sh1 and the rotation of the energy storing rotor body 82a, which is rotated by the rotational speed boosting mechanism 86 at a rotational speed higher than the rotational speed of the electric motor rotary shaft Sh1, are shut off between the gear G4 and the clutch rotary shaft Sh4, thereby preventing the rotation from being transmitted to the output shaft Sh5.

To be more specific, the clutch 83 changes a connection state between the gear G4 and the clutch rotary shaft Sh4. The clutch 83 includes the clutch rotary shaft Sh4 and a plurality of clutch plates 83a. An operator switches the clutch 83 to the connected state by operating the clutch operating unit 92. At this point of operation, the clutch 83 brings the clutch rotary shaft Sh4, the plurality of clutch plates 83a, and the gear G4 into a pressure contact, thus bringing the clutch rotary shaft Sh4, the plurality of clutch plates 83a, and the gear G4 into an integral body. In other words, the clutch 83 causes the gear G4 and the clutch rotary shaft Sh4 to be connected with each other. With such an operation, the gear G4, the plurality of clutch plates 83a, and the clutch rotary shaft Sh4 rotate as an integral body. As a result, the rotation of the electric motor rotary shaft Sh1 and the rotation of the energy storing rotor body 82a are transmitted to the output shaft Sh5 via the gear G4 and the clutch rotary shaft Sh4.

Further, an operator switches the clutch 83 to the shut-off state by operating the clutch operating unit 92. At this point of operation, the clutch 83 releases the pressure contact between the clutch rotary shaft Sh4, the plurality of clutch plates 83a, and the gear G4. In other words, the clutch 83 prevents the gear G4 and the clutch rotary shaft Sh4 from being connected with each other. With such an operation, the gear G4 rotates, but the plurality of clutch plates 83a and the clutch rotary shaft Sh4 do not rotate. As a result, the rotation of the electric motor rotary shaft Sh1 and the rotation of the energy storing rotor body 82a are prevented from being transmitted to the output shaft Sh5 via the gear G4 and the clutch rotary shaft Sh4. The clutch 83 may be a wet type multiple disc clutch, a dry type multiple disc clutch, a wet type single disc clutch, or a dry type single disc clutch, for example.

The left end portion of the output shaft Sh5 protrudes in the leftward direction 1 from the left surface of the casing 85. A drive sprocket not shown in the drawing is fixed to the left end portion of the output shaft Sh5. Further, a driven sprocket not shown in the drawing is fixed to the rear axle of the rear wheel 4. A drive chain not shown in the drawing extends between the drive sprocket and the driven sprocket. With such a configuration, as viewed in the rightward direction r, when the output shaft Sh5 rotates in the counterclockwise direction, the drive sprocket, the drive chain, and the driven sprocket rotate in the counterclockwise direction. The rear wheel 4 rotates in the counterclockwise direction together with the driven sprocket as viewed in the rightward direction r. As a result, the straddled electric vehicle 1 moves forward. As described above, the output shaft Sh5 is, when the clutch 83 is in the transmission state, rotated by the rotation of the electric motor rotary shaft Sh1 and the rotation of the energy-storing-rotor rotary shaft Sh2, which is rotated by the rotational speed boosting mechanism 86 at a rotational speed higher than the rotational speed of the electric motor rotary shaft Sh1. Accordingly, the output shaft Sh5 rotates the rear wheel 4.

The one-way clutch 84 is provided to the right end portion of the shaft Sh3. The one-way clutch 84 restricts the rotational direction of the shaft Sh3 such that the shaft Sh3 is allowed to rotate in the counterclockwise direction, but is not allowed to rotate in the clockwise direction as viewed in the rightward direction r. With such a restriction, the rear wheel 4 is not allowed to rotate in the clockwise direction as viewed in the rightward direction r. Accordingly, the straddled electric vehicle 1 is not allowed to move backward when the clutch 83 is in a coupled state. The one-way clutch 84 may be removed from the casing 85. Removing the one-way clutch 84 from the casing 85 allows the shaft Sh3 to rotate in the clockwise direction as viewed in the rightward direction r. Accordingly, the straddled electric vehicle 1 is allowed to move backward.

### [The manner of operation of electric power unit]

Next, the manner of operation of the electric power unit 8 is described. The operation mode of the electric power unit 8 includes a normal traveling mode and a high-energy output mode.

In the normal traveling mode, the clutch 83 is maintained in the transmission state with the operation of the clutch operating unit 92 performed by an operator. The operator further operates the accelerator operating unit 90 so as to cause the electric motor 81 to rotate the electric motor rotary shaft Sh1. With such operations, the rotation of the electric motor rotary shaft Sh1 is transmitted to the rear wheel 4. Accordingly, the straddled electric vehicle 1 moves forward. At this point of operation, the operator adjusts, by operating the accelerator operating unit 90, a torque which the electric motor 81 outputs. With such adjustment, the operator can adjust the speed of the straddled electric vehicle 1.

In the high-energy output mode, the electric power unit 8 momentarily outputs a large torque to the rear wheel 4. To be more specific, an operator switches the clutch 83 to the shut-off state by operating the clutch operating unit 92. The operator further operates the accelerator operating unit 90 so as to cause the electric motor 81 to rotate the electric motor rotary shaft Sh1. With such operations, the energy storing rotor body 82a is rotated and hence, kinetic energy is stored in the energy storing rotor body 82a. The operator causes the electric motor 81 to be driven while maintaining the clutch 83 in the shut-off state until sufficient kinetic energy is stored in the energy storing rotor body 82a.

After sufficient kinetic energy is stored in the energy storing rotor body 82a, the operator switches the clutch 83 from the shut-off state to the transmission state by operating the clutch operating unit 92 while causing the electric motor 81 to rotate the electric motor rotary shaft Sh1. With such operations, the rotation of the electric motor rotary shaft Sh1 and the rotation of the energy storing rotor body 82a are transmitted to the rear wheel 4. As a result, the electric power unit 8 momentarily outputs a large torque to the rear wheel 4.

### [Advantageous effects]

(a) According to the electric power unit 8, it is possible to improve a response of the electric power unit 8 to operations performed by a rider. To be more specific, the electric power unit 8 includes the clutch 83 which is configured to switch between the transmission state and the shut-off state based on an operation of the clutch operating unit 92 performed by the operator: in the transmission state, the rotation of the electric motor rotary shaft Sh1 and the rotation of the energy storing rotor body 82a are transmitted to the output shaft Sh5, and in the shut-off state, the rotation of the electric motor rotary shaft Sh1 and the rotation of the energy storing rotor body 82a are prevented from being transmitted to the output shaft Sh5. The operator operates the accelerator operating unit 90 to drive the electric motor 81 while maintaining the clutch 83 in the shut-off state by operating the clutch operating unit 92. With such operations, the energy storing rotor body 82a is rotated by the rotational speed boosting mechanism 86 at a rotational speed higher than the rotational speed of the electric motor rotary shaft Sh1 of the electric motor 81. However, the clutch 83 is in the shut-off state and hence, the rotation of the electric motor rotary shaft Sh1 is not transmitted to the output shaft Sh5 which rotates the rear wheel 4. Accordingly, high kinetic energy is stored in the energy storing rotor body 82a in a state in which the straddled electric vehicle 1 is in a stopped state. After sufficient kinetic energy is stored, the operator switches the clutch 83 from the shut-off state to the transmission state by operating the clutch operating unit 92. With such switching, the rotation of the energy storing rotor body 82a and the rotation of the electric motor rotary shaft Sh1 are transmitted to the output shaft Sh5 via the clutch 83. Accordingly, the electric power unit 8 momentarily outputs a large torque from the output shaft Sh5. As a result, it is possible to improve a response of the electric power unit 8 to operations performed by a rider.
(b) According to the electric power unit 8, it is possible to suppress an increase in weight of the electric power unit 8. To be more specific, in the electric power unit 8, the rotational speed boosting mechanism 86 rotates the energy storing rotor body 82a at a rotational speed higher than the rotational speed of the electric motor rotary shaft Sh1 of the electric motor 81. With such a configuration, high kinetic energy is stored in the energy storing rotor body 82a. The high kinetic energy stored in the energy storing rotor body 82a is output to the output shaft Sh5 via the clutch 83. Accordingly, a large torque is momentarily output to the output shaft Sh5. Therefore, it is not always necessary to increase the size of the electric motor 81 in order to increase a torque which the electric power unit 8 momentarily outputs. As a result, it is possible to suppress an increase in weight of the electric power unit 8.
(c) According to the electric power unit 8, it is also possible to suppress an increase in weight of the electric power unit 8 for the following reason. In the electric power unit 8, the rotational speed boosting mechanism 86 rotates the energy storing rotor body 82a at a rotational speed higher than the rotational speed of the electric motor rotary shaft Sh1 of the electric motor 81. Accordingly, high kinetic energy is stored in the energy storing rotor body 82a. With such a configuration, even when the energy storing rotor body 82a has a small weight, the energy storing rotor body 82a can store sufficient kinetic energy. As a result, it is possible to suppress an increase in weight of the electric power unit 8.
(d) According to the electric power unit 8, neither the energy storing rotor 82 nor the rotational speed boosting mechanism 86 is positioned on the rotation transmission path which couples the electric motor 81 and the clutch 83 with each other. With such a configuration, according to the electric power unit 8, the energy storing rotor 82 and the rotational speed boosting mechanism 86 are disposed at a position not between the electric motor 81 and the clutch 83.
(e) According to the electric power unit 8, the size of the electric power unit 8 in the left-right direction lr is reduced. To be more specific, the energy-storing-rotor rotary shaft Sh2 and the electric motor rotary shaft Sh1 do not overlap with each other as viewed in the leftward direction 1 or the rightward direction r. In other words, the energy-storing-rotor rotary shaft Sh2 and the electric motor rotary shaft Sh1 are not aligned on the same axis. With such a configuration, as viewed in the forward direction f or the backward direction b, a portion of the energy-storing-rotor rotary shaft Sh2 (left end portion) and a portion of the electric motor rotary shaft Sh1 (right end portion) can overlap with each other. Accordingly, it is possible to reduce a distance in the left-right direction lr between the energy storing rotor 82 and the electric motor 81. As a result, the size of the electric power unit 8 in the left-right direction lr is reduced.
(f) According to the electric power unit 8, the energy-storing-rotor rotary shaft Sh2 and the electric motor rotary shaft Sh1 do not overlap with each other as viewed in the leftward direction 1 or the rightward direction r. Accordingly, the degree of freedom in layout of the energy storing rotor 82 is increased. Therefore, it becomes possible to dispose the energy storing rotor 82 such that a response of the electric power unit 8 to operations performed by a rider is improved.
(g) According to the electric power unit 8, the energy-storing-rotor rotary shaft Sh2, the electric motor rotary shaft Sh1, and the clutch rotary shaft Sh4 are arranged in this order from the front f to the back b as viewed in the leftward direction 1 or the rightward direction r. Accordingly, the energy storing rotor 82 is disposed at a position not between the electric motor 81 and the clutch 83, thus allowing the electric motor 81 and the clutch 83 to be positioned close to each other. As a result, the size of the electric power unit 8 in the front-back direction fb is reduced.
(h) According to the electric power unit 8, the rotational direction of the electric motor rotary shaft Sh1 is opposite to the rotational direction of the energy storing rotor body 82a and hence, the direction of the angular momentum of the electric motor rotary shaft Sh1 is opposite to the direction of the angular momentum of the energy storing rotor body 82a. As a result, an angular momentum generated in the electric power unit 8 is reduced. In this embodiment, an angular momentum in the left-right direction lr is reduced in the electric power unit 8.
(i) According to the electric power unit 8, the clutch 83 and the rotational speed boosting mechanism 86 are connected to the electric motor rotary shaft Sh1 at the protruding portion Sh1a. Accordingly, the clutch 83 and the rotational speed boosting mechanism 86 are positioned to the right of the electric motor 81 in the rightward direction r. In other words, the clutch 83 and the rotational speed boosting mechanism 86 are not positioned to the left and the right of the electric motor 81 in a dispersed manner in the leftward direction 1 and in the rightward direction r. As a result, the size of the electric power unit 8 in the left-right direction 1r is reduced.

### [First modification]

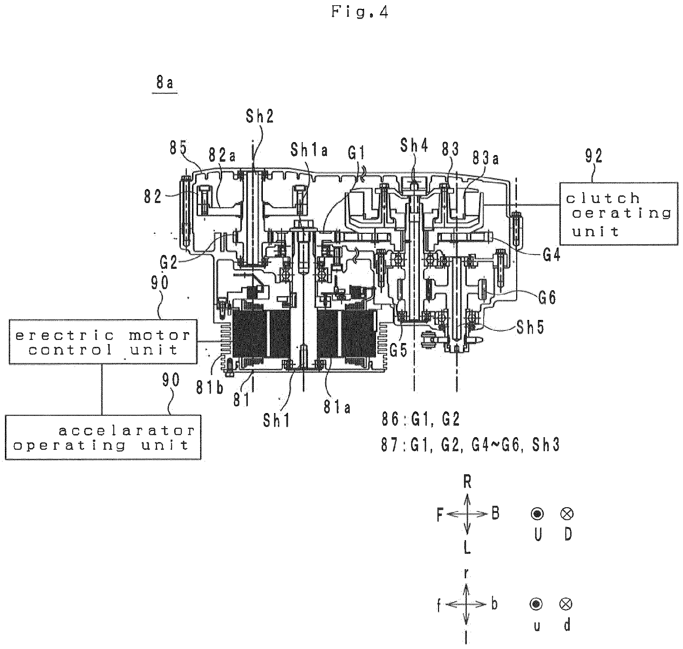

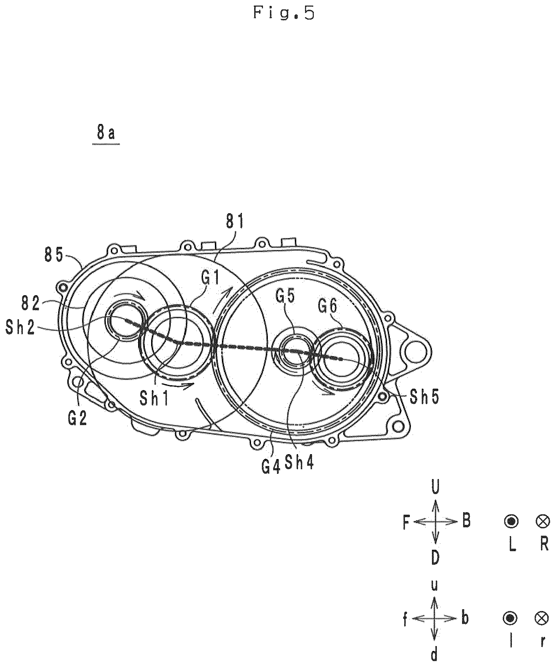

Hereinafter, an electric power unit 8a according to a first modification is described with reference to drawings. FIG. 4 is a cross-sectional view of an electric power unit 8a taken along plane parallel to the front-back direction fb and the left-right direction lr. FIG. 5 is a view showing the electric power unit 8a in a see-through manner as viewed in the rightward direction r.

The electric power unit 8a differs from the electric power unit 8 in that the electric power unit 8a does not include the shaft Sh3 and the gear G3. To be more specific, a gear G1 meshes with a gear G4. With such a configuration, an electric motor rotary shaft Sh1 and an output shaft Sh5 rotate in the counterclockwise direction as viewed in the rightward direction r. On the other hand, an energy-storing-rotor rotary shaft Sh2 and a clutch rotary shaft Sh4 rotate in the clockwise direction as viewed in the rightward direction r. Other configurations of the electric power unit 8a are substantially equal to the corresponding configurations of the electric power unit 8 and hence, description of such configurations is omitted.

(a) According to the electric power unit 8a, for the same reason as the electric power unit 8, it is possible to improve a response of the electric power unit 8a to operations performed by a rider.
(b), (c) According to the electric power unit 8a, for the same reason as the electric power unit 8, it is possible to suppress an increase in weight of the electric power unit 8a.
(d) According to the electric power unit 8a, for the same reason as the electric power unit 8, the energy storing rotor 82 and the rotational speed boosting mechanism 86 are disposed at a position not between the electric motor 81 and the clutch 83.
(e) According to the electric power unit 8a, for the same reason as the electric power unit 8, the size of the electric power unit 8a in the left-right direction lr is reduced.
(f) According to the electric power unit 8a, for the same reason as the electric power unit 8, it becomes possible to dispose the energy storing rotor 82 such that a response of the electric power unit 8a to operations performed by a rider is improved.
(g) According to the electric power unit 8a, for the same reason as the electric power unit 8, the size of the electric power unit 8a in the front-back direction fb is reduced.
(h) According to the electric power unit 8a, for the same reason as the electric power unit 8, an angular momentum generated in the electric power unit 8a is reduced.
(i) According to the electric power unit 8a, for the same reason as the electric power unit 8, the size of the electric power unit 8a in the left-right direction lr is reduced.

Further, the electric power unit 8a does not include the shaft Sh3 and the gear G3. Accordingly, a distance in the front-back direction fb between the energy storing rotor 82 and the clutch 83 is reduced. As a result, the size of the electric power unit 8a in the front-back direction fb is reduced.

### [Second modification]

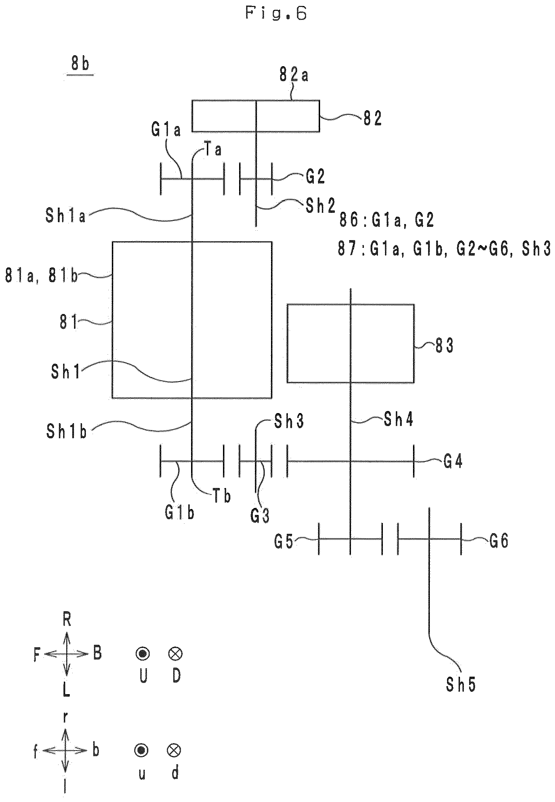

Hereinafter, an electric power unit 8b according to a second modification is described with reference to drawings. FIG. 6 is a schematic view of the electric power unit 8b as viewed in the downward direction d. FIG. 6 is a schematic view and hence, sizes of respective configurations shown in FIG. 6 differ from actual sizes of the respective configurations.

The electric power unit 8b differs from the electric power unit 8 in that an energy storing rotor 82 is disposed to the right of an electric motor 81 in the rightward direction r, and a clutch 83 is disposed behind the electric motor 81 in the backward direction b. Hereinafter, the electric power unit 8b is described mainly with respect to this difference.

An electric motor rotary shaft Sh1 has a right end Ta and a left end Tb. Further, the electric motor rotary shaft Sh1 includes protruding portions Sh1a, Sh1b. The protruding portion Sh1a protrudes in the rightward direction r from an electric motor body 81b. Accordingly, the protruding portion Sh1a includes the right end Ta. The protruding portion Sh1b protrudes in the leftward direction 1 from the electric motor body 81b. Accordingly, the protruding portion Sh1b includes the left end Tb.

A gear G1a is fixed to the right end portion of the electric motor rotary shaft Sh1 (that is, the protruding portion Sh1a). With such a configuration, the gear Gla rotates together with the electric motor rotary shaft Sh1.

A gear G1b is fixed to the left end portion of the electric motor rotary shaft Sh1 (that is, the protruding portion Sh1b). With such a configuration, the gear G1b rotates together with the electric motor rotary shaft Sh1.

The energy storing rotor 82 is disposed to the right of the electric motor 81 in the rightward direction r. The energy storing rotor 82 includes an energy storing rotor body 82a and an energy-storing-rotor rotary shaft Sh2. The energy storing rotor body 82a stores kinetic energy. The energy storing rotor body 82a is a disc-shaped plate having a main surface perpendicular to the left-right direction lr. The energy-storing-rotor rotary shaft Sh2 passes through the center of the energy storing rotor body 82a, and extends in the left-right direction lr. The energy-storing-rotor rotary shaft Sh2 is disposed behind the protruding portion Shla in the backward direction b.

A gear G2 is fixed to the left portion of the energy-storing-rotor rotary shaft Sh2. With such a configuration, the gear G2 rotates together with the energy-storing-rotor rotary shaft Sh2. Further, the gear G2 meshes with the gear Gla. Accordingly, the gear G2 is rotated by the gear G1a. In this modification, the number of teeth of the gear G2 is smaller than the number of teeth of the gear Gla. Accordingly, the rotational speed of the energy-storing-rotor rotary shaft Sh2 is higher than the rotational speed of the electric motor rotary shaft Sh1. However, as viewed in the leftward direction 1 or the rightward direction r, the rotational direction of the energy-storing-rotor rotary shaft Sh2 is opposite to the rotational direction of the electric motor rotary shaft Sh1. Accordingly, the energy-storing-rotor rotary shaft Sh2 is rotated in the counterclockwise direction as viewed in the rightward direction r. As described above, the gears Gla, G2 function as a rotational speed boosting mechanism 86 which transmit the rotation of the electric motor rotary shaft Sh1 to the energy storing rotor body 82a and rotates the energy storing rotor body 82a at a rotational speed higher than the rotational speed of the electric motor rotary shaft Sh1. The rotational speed boosting mechanism 86 is connected to the protruding portion Sh1a.

A shaft Sh3 extends in the left-right direction lr. The shaft Sh3 is disposed behind the protruding portion Sh1b in the backward direction b.

A gear G3 is fixed to the shaft Sh3. With such a configuration, the gear G3 rotates together with the shaft Sh3. Further, the gear G3 meshes with the gear G1b. Accordingly, the gear G3 is rotated by the gear G1b. However, as viewed in the leftward direction 1 or the rightward direction r, the rotational direction of the shaft Sh3 is opposite to the rotational direction of the electric motor rotary shaft Sh1. Accordingly, the shaft Sh3 is rotated in the counterclockwise direction as viewed in the rightward direction r.

The clutch 83 is disposed behind the electric motor 81 in the backward direction b. The clutch 83 includes a clutch rotary shaft Sh4. The clutch rotary shaft Sh4 extends in the left-right direction lr. The clutch rotary shaft Sh4 is disposed behind the shaft Sh3 in the backward direction b.

A gear G4 is fixed to the left portion of the clutch rotary shaft Sh4. With such a configuration, the gear G4 rotates together with the clutch rotary shaft Sh4. Further, the gear G4 meshes with the gear G3. Accordingly, the gear G4 is rotated by the gear G3. However, as viewed in the leftward direction 1 or the rightward direction r, the rotational direction of the clutch rotary shaft Sh4 is opposite to the rotational direction of the shaft Sh3. Accordingly, the rotational direction of the clutch rotary shaft Sh4 is equal to the rotational direction of the electric motor rotary shaft Sh1. Therefore, the clutch rotary shaft Sh4 is rotated in the clockwise direction as viewed in the rightward direction r. Further, the clutch 83 is connected to the protruding portion Sh1b via gears G1b, G3, G4.

A gear G5 is fixed to the left portion of the clutch rotary shaft Sh4. With such a configuration, the gear G5 rotates together with the clutch rotary shaft Sh4.

An output shaft Sh5 extends in the left-right direction lr. The output shaft Sh5 is disposed behind the clutch rotary shaft Sh4 in the backward direction b.

A gear G6 is fixed to the right portion of the output shaft Sh5. With such a configuration, the gear G6 rotates together with the output shaft Sh5. Further, the gear G6 meshes with the gear G5. Accordingly, the gear G6 is rotated by the gear G5. However, as viewed in the leftward direction 1 or the rightward direction r, the rotational direction of the output shaft Sh5 is opposite to the rotational direction of the clutch rotary shaft Sh4. Accordingly, the output shaft Sh5 is rotated in the counterclockwise direction as viewed in the rightward direction r.

The clutch 83 of the electric power unit 8b is substantially equal to the clutch 83 of the electric power unit 8 and hence, the description of the clutch 83 is omitted.

(a) According to the electric power unit 8b, for the same reason as the electric power unit 8, it is possible to improve a response of the electric power unit 8b to operations performed by a rider.
(b), (c) According to the electric power unit 8b, for the same reason as the electric power unit 8, it is possible to suppress an increase in weight of the electric power unit 8b.
(d) According to the electric power unit 8b, for the same reason as the electric power unit 8, the energy storing rotor 82 and the rotational speed boosting mechanism 86 are disposed at a position not between the electric motor 81 and the clutch 83.
(e) According to the electric power unit 8b, for the same reason as the electric power unit 8, the size of the electric power unit 8b in the left-right direction lr is reduced.
(f) According to the electric power unit 8b, for the same reason as the electric power unit 8, it becomes possible to dispose the energy storing rotor 82 such that a response of the electric power unit 8b to operations performed by a rider is improved.
(h) According to the electric power unit 8b, for the same reason as the electric power unit 8, an angular momentum generated in the electric power unit 8b is reduced.

Further, according to the electric power unit 8b, it is possible to approximate the weight of the left portion of the electric power unit 8b and the weight of the right portion of the electric power unit 8b. To be more specific, the rotational speed boosting mechanism 86 is connected to the protruding portion Sh1a. With such a configuration, the rotational speed boosting mechanism 86 and the energy storing rotor 82 are disposed further rightward in the rightward direction r than the electric motor body 81b in the rightward direction r. Further, the clutch 83 is connected to the protruding portion Sh1b. With such a configuration, the gears G1b, G3 to G6, the shaft Sh3 and the output shaft Sh5 are disposed further leftward in the leftward direction 1 than the electric motor body 81b. Accordingly, heavy objects are disposed both further leftward 1 and rightward r than the electric motor body 81b. As a result, according to the electric power unit 8b, it is possible to approximate the weight of the left portion of the electric power unit 8b and the weight of the right portion of the electric power unit 8b.

Further, in the electric power unit 8b, the clutch 83 is disposed behind the electric motor 81 in the backward direction b, and is not positioned further leftward 1 or rightward r than the electric motor body 81b. With such a configuration, the size of the electric power unit 8b in the left-right direction 1r is reduced.

### [Third modification]

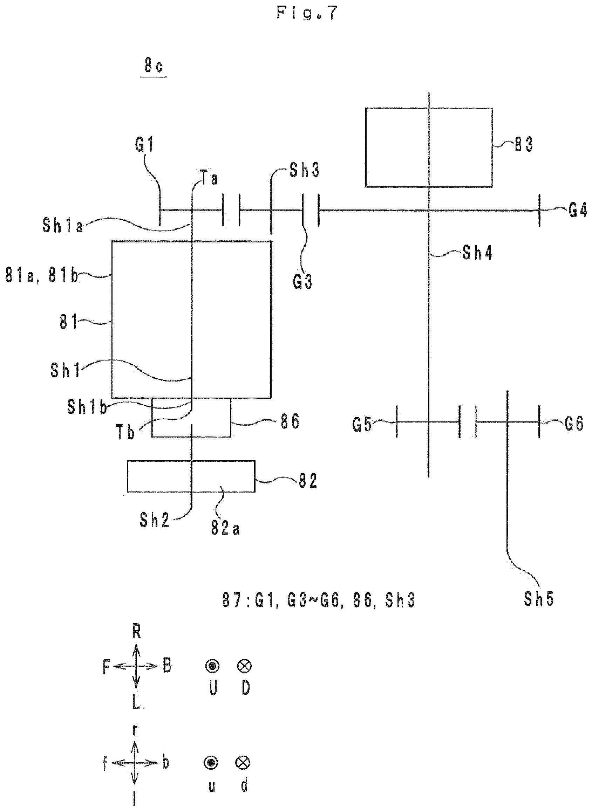

Hereinafter, an electric power unit 8c according to a third modification is described with reference to drawings. FIG. 7 is a schematic view of the electric power unit 8c as viewed in the downward direction d. FIG. 7 is a schematic view and hence, sizes of respective configurations shown in FIG. 7 differ from actual sizes of the respective configurations.

The electric power unit 8c differs from the electric power unit 8 in that an energy storing rotor 82 is disposed to the left of an electric motor 81 in the leftward direction 1. Hereinafter, the electric power unit 8c is described mainly with respect to this difference.

An electric motor rotary shaft Sh1 has a right end Ta and a left end Tb. Further, the electric motor rotary shaft Sh1 includes protruding portions Sh1a, Sh1b. The protruding portion Sh1a protrudes in the rightward direction r from an electric motor body 81b. Accordingly, the protruding portion Sh1a includes the right end Ta. The protruding portion Sh1b protrudes in the leftward direction 1 from the electric motor body 81b. Accordingly, the protruding portion Sh1b includes the left end Tb.

The energy storing rotor 82 is disposed to the left of the electric motor 81 in the leftward direction 1. The energy storing rotor 82 includes an energy storing rotor body 82a and an energy-storing-rotor rotary shaft Sh2. The energy storing rotor body 82a stores kinetic energy. The energy storing rotor body 82a is a disc-shaped plate having a main surface perpendicular to the left-right direction lr. The energy-storing-rotor rotary shaft Sh2 passes through the center of the energy storing rotor body 82a, and extends in the left-right direction lr. The energy-storing-rotor rotary shaft Sh2 is disposed to the left of the protruding portion Sh1b in the leftward direction 1. As viewed in the leftward direction 1 or the rightward direction r, the electric motor rotary shaft Sh1 and the energy-storing-rotor rotary shaft Sh2 overlap with each other.

A rotational speed boosting mechanism 86 transmits the rotation of the electric motor rotary shaft Sh1 to the energy storing rotor body 82a to rotate the energy storing rotor body 82a at a rotational speed higher than the rotational speed of the electric motor rotary shaft Sh1. The rotational direction of the energy storing rotor body 82a is equal to the rotational direction of the electric motor rotary shaft Sh1. The rotational speed boosting mechanism 86 is connected to the protruding portion Sh1b and the energy-storing-rotor rotary shaft Sh2. The rotational speed boosting mechanism 86 may be formed of a planetary gear mechanism, for example.

The gears G1, G3 to G6, the shaft Sh3, the output shaft Sh5 and a clutch 83 of the electric power unit 8c are substantially equal to the gears G1, G3 to G6, the shaft Sh3, the output shaft Sh5, and the clutch 83 of the electric power unit 8 and hence, the description of these members is omitted.
(a) According to the electric power unit 8c, for the same reason as the electric power unit 8, it is possible to improve a response of the electric power unit 8c to operations performed by a rider.
(b), (c) According to the electric power unit 8c, for the same reason as the electric power unit 8, it is possible to suppress an increase in weight of the electric power unit 8c.
(d) According to the electric power unit 8c, for the same reason as the electric power unit 8, the energy storing rotor 82 and the rotational speed boosting mechanism 86 are disposed at a position not between the electric motor 81 and the clutch 83.

Further, according to the electric power unit 8c, it is possible to approximate the weight of the left portion of the electric power unit 8c and the weight of the right portion of the electric power unit 8c. To be more specific, the rotational speed boosting mechanism 86 is connected to the protruding portion Sh1b. With such a configuration, the rotational speed boosting mechanism 86 and the energy storing rotor 82 are disposed further leftward in the leftward direction 1 than the electric motor body 81b. Further, the clutch 83 is connected to the protruding portion Sh1a. With such a configuration, the gears G1, G3, G4, the shaft Sh3, and the clutch 83 are disposed further rightward in the rightward direction r than the electric motor body 81b. Accordingly, heavy objects are disposed both further leftward and rightward in the leftward direction 1 and the rightward direction r than the electric motor body 81b. As a result, according to the electric power unit 8c, it is possible to approximate the weight of the left portion of the electric power unit 8c and the weight of the right portion of the electric power unit 8c.

### [Fourth modification]

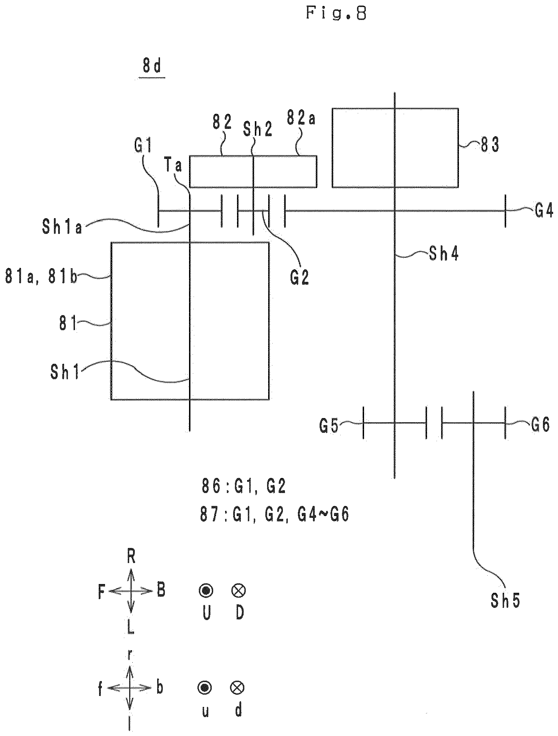

Hereinafter, an electric power unit 8d according to a fourth modification is described with reference to drawings. FIG. 8 is a schematic view of the electric power unit 8d as viewed in the downward direction d. FIG. 8 is a schematic view and hence, sizes in respective configurations shown in FIG. 8 differ from actual sizes of the respective configurations.

The electric power unit 8d differs from the electric power unit 8 with respect to the arrangement of an energy storing rotor 82 and a gear G2. To be more specific, in the electric power unit 8, the gear G3 is disposed between the gear G1 and the gear G4. On the other hand, in the electric power unit 8d, the gear G2 is disposed between the gear G1 and a gear G4. The gear G2 is fixed to an energy-storing-rotor rotary shaft Sh2. As described above, in the electric power unit 8d, the energy storing rotor 82 is positioned on a rotation transmission path which couples an electric motor 81 and a clutch 83 with each other. Other configurations of the electric power unit 8d are substantially equal to the corresponding configurations of the electric power unit 8 and hence, description of such configurations is omitted.
(a) According to the electric power unit 8d, for the same reason as the electric power unit 8, it is possible to improve a response of the electric power unit 8d to operations performed by a rider.
(b), (c) According to the electric power unit 8d, for the same reason as the electric power unit 8, it is possible to suppress an increase in weight of the electric power unit 8d.
(e) According to the electric power unit 8d, for the same reason as the electric power unit 8, the size of the electric power unit 8d in the left-right direction lr is reduced.
(f) According to the electric power unit 8d, for the same reason as the electric power unit 8, it becomes possible to dispose the energy storing rotor 82 such that a response of the electric power unit 8d to operations performed by a rider is improved.
(h) According to the electric power unit 8d, for the same reason as the electric power unit 8, an angular momentum generated in the electric power unit 8d is reduced.
(i) According to the electric power unit 8d, for the same reason as the electric power unit 8, the size of the electric power unit 8d in the left-right direction lr is reduced.

### [Fifth modification]

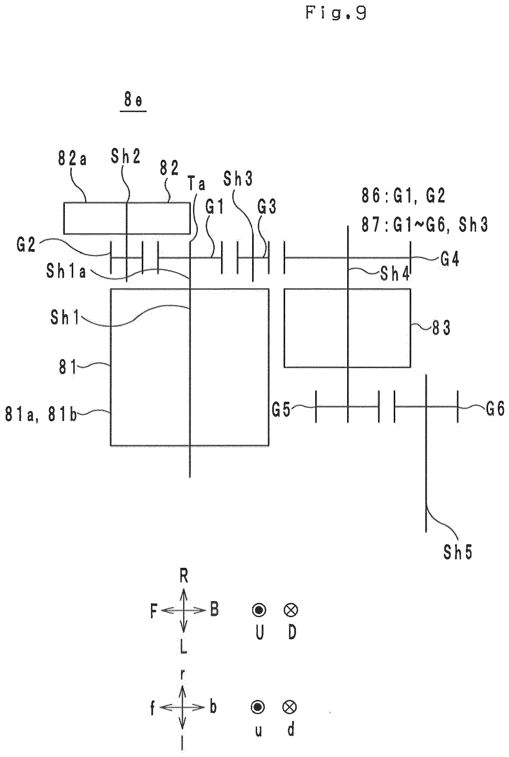

Hereinafter, an electric power unit 8e according to a fifth modification is described with reference to drawings. FIG. 9 is a schematic view of the electric power unit 8e as viewed in the downward direction d. FIG. 9 is a schematic view and hence, sizes in respective configurations shown in FIG. 9 differ from actual sizes of the respective configurations.

The electric power unit 8e differs from the electric power unit 8 with respect to the arrangement of a clutch 83. To be more specific, in the electric power unit 8, the clutch 83 is disposed to the right of the gear G4 in the rightward direction r. On the other hand, in the electric power unit 8e, the clutch 83 is disposed to the left of a gear G4 in the leftward direction 1. Accordingly, the clutch 83 is disposed behind an electric motor 81 in the backward direction b.
(a) According to the electric power unit 8e, for the same reason as the electric power unit 8, it is possible to improve a response of the electric power unit 8e to operations performed by a rider.
(b), (c) According to the electric power unit 8e, for the same reason as the electric power unit 8, it is possible to suppress an increase in weight of the electric power unit 8e.
(d) According to the electric power unit 8e, for the same reason as the electric power unit 8, the energy storing rotor 82 and the rotational speed boosting mechanism 86 are disposed at a position not between the electric motor 81 and the clutch 83.
(e) According to the electric power unit 8e, for the same reason as the electric power unit 8, the size of the electric power unit 8e in the left-right direction lr is reduced.
(f) According to the electric power unit 8e, for the same reason as the electric power unit 8, it becomes possible to dispose the energy storing rotor 82 such that a response of the electric power unit 8e to operations performed by a rider is improved.
(g) According to the electric power unit 8e, for the same reason as the electric power unit 8, the size of the electric power unit 8e in the front-back direction fb is reduced.
(h) According to the electric power unit 8e, for the same reason as the electric power unit 8, an angular momentum generated in the electric power unit 8e is reduced.
(i) According to the electric power unit 8e, for the same reason as the electric power unit 8, the size of the electric power unit 8e in the left-right direction lr is reduced.

Further, in the electric power unit 8e, the clutch 83 is disposed behind the electric motor 81 in the backward direction b. Accordingly, the clutch 83 is disposed at a position around the center of the electric power unit 8e in the left-right direction lr. The clutch 83 is a heavy object in the electric power unit 8e. Accordingly, in the electric power unit 8e, the heavy object is disposed at a position around the center of the electric power unit 8e.

### [Sixth modification]

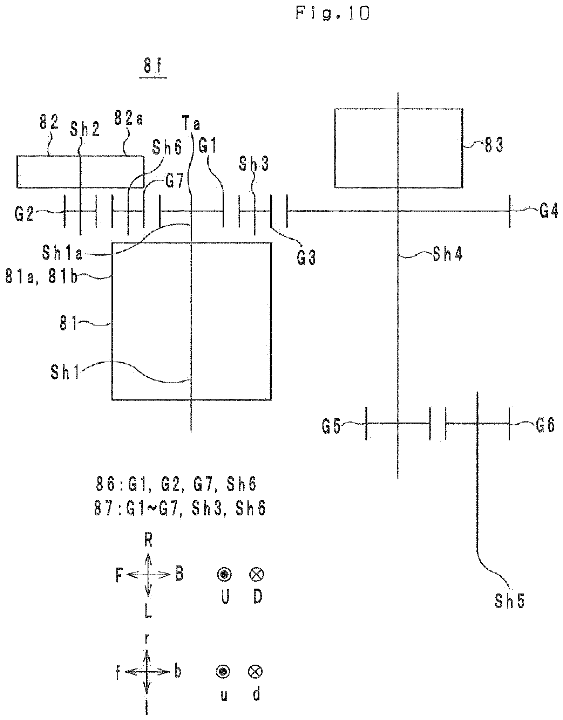

Hereinafter, an electric power unit 8f according to a sixth modification is described with reference to drawings. FIG. 10 is a schematic view of the electric power unit 8f as viewed in the downward direction d. FIG. 10 is a schematic view and hence, sizes in respective configurations shown in FIG. 10 differ from actual sizes of the respective configurations.

The electric power unit 8f differs from the electric power unit 8 in that the electric power unit 8f further includes a shaft Sh6 and a gear G7. To be more specific, in the electric power unit 8f, the shaft Sh6 is disposed in front of a protruding portion Sh1a in the forward direction f. The gear G7 is fixed to the shaft Sh6. With such a configuration, the gear G7 rotates together with the shaft Sh6. The gear G7 meshes with a gear G1 and a gear G2. As a result, the rotational direction of an energy storing rotor body 82a is equal to the rotational direction of an electric motor rotary shaft Sh1. Other configurations of the electric power unit 8f are substantially equal to the corresponding configurations of the electric power unit 8 and hence, description of such configurations is omitted.
(a) According to the electric power unit 8f, for the same reason as the electric power unit 8, it is possible to improve a response of the electric power unit 8f to operations performed by a rider.
(b), (c) According to the electric power unit 8f, for the same reason as the electric power unit 8, it is possible to suppress an increase in weight of the electric power unit 8f.
(d) According to the electric power unit 8f, for the same reason as the electric power unit 8, the energy storing rotor 82 and the rotational speed boosting mechanism 86 are disposed at a position not between the electric motor 81 and the clutch 83.
(e) According to the electric power unit 8f, for the same reason as the electric power unit 8, the size of the electric power unit 8f in the left-right direction lr is reduced.
(f) According to the electric power unit 8f, for the same reason as the electric power unit 8, it becomes possible to dispose the energy storing rotor 82 such that a response of the electric power unit 8f to operations performed by a rider is improved.
(g) According to the electric power unit 8f, for the same reason as the electric power unit 8, the size of the electric power unit 8f in the front-back direction fb is reduced.
(i) According to the electric power unit 8f, for the same reason as the electric power unit 8, the size of the electric power unit 8f in the left-right direction lr is reduced.

### (Other embodiments)

The embodiments and modifications described and/or illustrated in this specification are given for facilitating the understanding of this disclosure, and do not limit the concept of this disclosure. The above-mentioned embodiments and modifications may be adapted or altered without departing from the gist of the embodiments and modifications.

The gist includes any and all embodiments having equivalent elements, modifications, omissions, combinations (a combination of the feature of the embodiment and the feature of the modification, for example), adaptations, and alterations as would be appreciated by those who are skilled in the art based on the embodiments disclosed in this specification. The limitations in the claims are to be interpreted broadly based on the term employed in the claims, and not limited to the embodiments and modifications described in this specification or during the prosecution of this application. Such embodiments and modifications are to be construed as non-exclusive. For example, in this specification, the term "preferably" or "may" is non-exclusive and means "preferably, but not limited to" or "may be ..., but not limited to".

It is assumed that the straddled electric vehicle 1 is a vehicle for motorcycle trials. However, the straddled electric vehicle 1 may be a vehicle other than a vehicle for motorcycle trials. The straddled electric vehicle 1 may be a super-sport type vehicle, a tourer type vehicle, a naked type vehicle, a cruiser type vehicle, a scooter type vehicle, or a motocross type vehicle. Vehicles for motorcycle trials and motocross type vehicles are off-road vehicles. Super-sport type vehicles, tourer type vehicles, naked type vehicles, cruiser type vehicles, and scooter type vehicles are on-road vehicles.

The straddled electric vehicle 1 includes one front wheel 3. However, the straddled electric vehicle 1 may include two or more front wheels. Further, the straddled electric vehicle 1 includes one rear wheel 4. However, the straddled electric vehicle 1 may include two or more rear wheels.

Further, in the straddled electric vehicle 1, the vehicle body 2 leans in the leftward direction L when turning in the leftward direction L, and the vehicle body 2 leans in the rightward direction R when turning in the rightward direction R. However, the vehicle body 2 may not lean in the leftward direction L when turning in the leftward direction L, and the vehicle body 2 may not lean in the rightward direction R when turning in the rightward direction R. In other words, the straddled electric vehicle 1 may be a four-wheeled motor vehicle. In the case in which the straddled electric vehicle 1 is a four-wheeled motor vehicle such as ATV (All Terrain Vehicle), the vehicle body 2 leans in the rightward direction R when turning in the leftward direction L, and the vehicle body 2 leans in the leftward direction L when turning in the rightward direction R. In this case, drive wheels may be front wheels, rear wheels, or both front and rear wheels.

In the electric power unit 8, 8a to 8f, the electric motor rotary shaft Sh1 and the energy-storing-rotor rotary shaft Sh2 extend in the left-right direction lr. However, the electric motor rotary shaft Sh1 and the energy-storing-rotor rotary shaft Sh2 may extend in a direction other than the left-right direction lr. The electric motor rotary shaft Sh1 and the energy-storing-rotor rotary shaft Sh2 may extend in the up-down direction ud or in the front-back direction fb.

The battery 9 may be a battery other than a lithium ion battery. Accordingly, the battery 9 may be a lead-acid battery, a nickel hydrogen battery, an all-solid state battery or the like, for example.

The energy storing rotor body 82a may have a shape other than a disc plate shape. The energy storing rotor body 82a may be formed of a plurality of rod-shaped members extending in a direction orthogonal to the energy-storing-rotor rotary shaft Sh2, for example.

The power source of the straddled electric vehicle 1 is not limited to the battery 9. The power source of the straddled electric vehicle 1 may be an internal combustion engine which generates power by burning fossil fuel, such as gasoline or light oil, or alcohol fuel, such as methanol.

The electric power unit 8, 8a to 8f may include a constant velocity mechanism as a substitute for the speed reduction mechanism 87. The constant velocity mechanism transmits a rotation to the output shaft Sh5 from the electric motor rotary shaft Sh1 such that the rotational speed of the output shaft Sh5 becomes equal to the rotational speed of the electric motor rotary shaft Sh1. Further, the constant velocity mechanism transmits a rotation to the output shaft Sh5 from the energy-storing-rotor rotary shaft Sh2 such that the rotational speed of the output shaft Sh5 becomes equal to the rotational speed of the energy-storing-rotor rotary shaft Sh2.

### REFERENCE SIGNS LIST

1: electric vehicle
2: vehicle body
3: front wheel
4: rear wheel
5: steering mechanism
6: suspension
7: seat
8, 8a to 8f: electric power unit
9: battery
10: electric motor control unit
81: electric motor
81a: rotor
81b: electric motor body
82: energy storing rotor
82a: energy storing rotor body
83: clutch
83a: clutch plate
84: one-way clutch
85: casing
86: rotational speed boosting mechanism
87: speed reduction mechanism
90: accelerator operating unit
92: clutch operating unit
G1 to G7, Gla, G1b: gear
Sh1: electric motor rotary shaft
Sh1a, Sh1b: protruding portion
Sh2: energy-storing-rotor rotary shaft
Sh3, Sh6: shaft
Sh4: clutch rotary shaft
Sh5: output shaft
Ta: right end
Tb: left end

## Claims

1. An electric power unit (8) for use in a straddled electric vehicle (1), the straddled electric vehicle including:
a vehicle body (2) ;
a drive wheel (4) supported on the vehicle body (2)
a power source (9) ;
the electric power unit (8) including an electric motor (81) which is configured to be driven when receiving a supply of power from the power source (9);
an accelerator operating unit (90) configured to be operated by an operator;
an electric motor control unit (10) configured to control the electric motor (81) based on an operation of the accelerator operating unit (90) performed by the operator; and
a clutch operating unit (92) configured to be operated by the operator, the electric power unit (8) comprising:
the electric motor (81) including an electric motor rotary shaft (Sh1) and configured to rotate the electric motor rotary shaft (Sh1) responsive to a supply of power from the power source (9); and
an energy storing rotor (82) including an energy-storing-rotor rotary shaft (Sh2) and an energy storing rotor body (82a), the energy storing rotor body (82a) configured to store kinetic energy by being rotated about the energy-storing-rotor rotary shaft (Sh2),
**characterized in that**
the electric power unit (8) further comprises:
a rotational speed boosting mechanism (86) configured to transmit a rotation of the electric motor rotary shaft (Sh1) to the energy storing rotor body (82a) to rotate the energy storing rotor body (82a) at a rotational speed higher than a rotational speed of the electric motor rotary shaft (Sh1), a value of a ratio of the rotational speed of the energy storing rotor body (82a) to the rotational speed of the electric motor rotary shaft (Sh1) being constant;
a clutch (83) configured to switch between a transmission state and a shut-off state based on an operation of the clutch operating unit (92) performed by the operator, wherein, in the transmission state, the rotation of the electric motor rotary shaft (Sh1) and the rotation of the energy storing rotor body (82a), budy, which is configured to be rotated by the rotational speed boosting mechanism (86) at a rotational speed higher than a rotational speed of the electric motor rotary shaft (Sh1), are transmitted to an output shaft (Sh5), and in the shut-off state, the rotation of the electric motor rotary shaft (Sh1) and the rotation of the energy storing rotor body (82a), which is configured to be rotated by the rotational speed boosting mechanism (86) at a rotational speed higher than a rotational speed of the electric motor rotary shaft (Sh1), are prevented from being transmitted to the output shaft (Sh5); and
the output shaft (Sh5) configured to rotate the drive wheel, (4) the output shaft (Sh5) being configured to be rotated, with the clutch (83) being in the transmission state, by the rotation of the electric motor rotary shaft (Sh1) and the rotation of the energy storing rotor body (82a), which is configured to be rotated by the rotational speed boosting mechanism (86) at a rotational speed higher than a rotational speed of the electric motor rotary shaft (Sh1).

2. The electric power unit (8) according to claim 1 further comprising a speed reduction mechanism (87) configured to transmit a rotation to the output shaft (Sh5) from the electric motor rotary shaft (Sh1) while reducing a rotational speed such that a rotational speed of the output shaft (Sh5) falls below a rotational speed of the electric motor rotary shaft (Sh1), and configured to transmit a rotation to the output shaft (Sh5) from the energy-storing-rotor rotary shaft (Sh2) while reducing a rotational speed such that the rotational speed of the output shaft (Sh5) falls below a rotational speed of the energy-storing-rotor rotary shaft (Sh2) .

3. The electric power unit (8) according to claim 1 or claim 2, wherein neither the energy storing rotor (82) nor the rotational speed boosting mechanism (86) is positioned on a rotation transmission path which couples the electric motor (81) and the clutch (83) with each other.

4. The electric power unit (8) according to any one of claims 1 to 3, wherein
the energy-storing-rotor rotary shaft (Sh2) and the electric motor rotary shaft (Sh1) extend in a firstdirection (lr), and
a rotational direction of the electric motor rotary shaft (Sh1) is opposite to a rotational direction of the energy storing rotor body (82a).

5. The electric power unit (8) according to claim 3, wherein
the energy-storing-rotor rotary shaft (Sh2) and the electric motor rotary shaft (Sh1) extend in a first direction (Ir), and
the energy-storing-rotor rotary shaft (Sh2) and the electric motor rotary (Sh1) do not overlap with each other as viewed in the first direction (lr).

6. The electric power unit (8) according to claim 5, wherein
the clutch (83) includes a clutch rotary shaft (Sh4) extending in the first direction (lr) and a clutch plate (83a),
the clutch plate (83a) configured to rotate together with the clutch rotary shaft (Sh4) with the clutch (83) being in the transmission state, and the clutch plate (83a) configured to be prevented from being rotated with the clutch (83) being in the shut-off state, and
the energy-storing-rotor rotary shaft (Sh2), the electric motor rotary shaft (Sh1), and the clutch rotary shaft (Sh4) are, as viewed in the first direction (lr), arranged in this order in a second direction (fb) which is orthogonal to the first direction (lr).

7. The electric power unit (8) according to any one of claims 5 to 6, wherein
the energy-storing-rotor rotary shaft (Sh2) and the electric motor rotary shaft (Sh1) extend in the first direction (lr), and
a rotational direction of the electric motor rotary shaft (Sh1) is opposite to a rotational direction of the energy storing rotor body (82a)

8. The electric power unit (8) according to any one of claims 5 to 7, wherein
the first direction (lr) is a vehicle-body left-right direction.

9. The electric power unit (8) according to any one of claims 1 to 8, wherein
the electric motor (81) further includes: a rotor (81a) which is supported on the electric motor rotary shaft (Sh1), and which rotates together with the electric motor rotary shaft (Sh1); and an electric motor body (81b) which accommodates the rotor (81a),
the electric motor rotary shaft (Sh1) includes a first protruding portion (Sh1a) which protrudes from the electric motor body (81b), and the clutch (83) and the rotational speed boosting mechanism (86) are connected to the first protruding Portion (Sh1a).

10. The electric power unit (8) according to claim 1, wherein
the electric motor (81) further includes: a rotor (81a) which is supported on the electric motor rotary shaft (Sh1), and which rotates together with the electric motor rotary shaft (Sh1); and an electric motor body (81b) which accommodates the rotor (81a), the electric motor rotary shaft (Sh1) includes a first protruding portion (Sh1a) and a second protruding portion (Sh1b) which protrude from the electric motor body (81b) the electric motor rotary shaft has a first end (Ta) and a second end (Tb), the first protruding portion (Sh1a) includes the first end (Ta), the second protruding portion (Sh1b) includes the second end (Tb), the rotational speed boosting mechanism (86) is connected to the second protruding portion (Sh1b) and
the clutch is connected to the first protruding portion (Sh1a).

11. A straddled electric vehicle (1) comprising:
the electric power unit (8) described in any one of claims 1 to 10;
a vehicle body (2) ; a drive wheel (4) supported on the vehicle body (2) ; power source (9); an accelerator operating unit (90) configured to be operated by the operator;
an electric motor control unit (10) configured to control the electric motor (81) based on the operation of the accelerator operating unit (90) performed by the operator; and
clutch operating unit (92) configured to be operated by the operator.

## Patentansprüche

1. Eine elektrische Leistungseinheit (8) für die Verwendung in einem Grätschsitz-Elektrofahrzeug (1), wobei das Grätschsitz-Elektrofahrzeug folgende Merkmale umfasst:
einen Fahrzeugkörper (2);
ein Antriebsrad (4), das auf dem Fahrzeugkörper (2) getragen wird;
eine Leistungsquelle (9);
wobei die elektrische Leistungseinheit (8) einen Elektromotor (81) umfasst, der dazu konfiguriert ist, angetrieben zu werden, wenn derselbe eine Leistungsversorgung von der Leistungsquelle (9) empfängt;
eine Beschleunigerbetätigungseinheit (90), die dazu konfiguriert ist, durch eine Bedienperson betätigt zu werden;
eine Elektromotorsteuereinheit (10), die dazu konfiguriert ist, den Elektromotor (81) basierend auf einer Betätigung der Beschleunigerbetätigungseinheit (90) zu steuern, die durch die Bedienperson durchgeführt wird; und
eine Kupplungsbetätigungseinheit (92), die dazu konfiguriert ist, durch die Bedienperson betätigt zu werden, wobei die elektrische Leistungseinheit (8) folgende Merkmale aufweist:
den Elektromotor (81), der eine Elektromotordrehwelle (Sh1) umfasst und dazu konfiguriert ist, die Elektromotordrehwelle (Sh1) ansprechend auf eine Leistungsversorgung von der Leistungsquelle (9) zu drehen; und
einen Energiespeicherrotor (82), der eine Energiespeicherrotordrehwelle (Sh2) und einen Energiespeicherrotorkörper (82a) umfasst, wobei der Energiespeicherrotorkörper (82a) dazu konfiguriert ist, kinetische Energie zu speichern, indem derselbe um die Energiespeicherrotordrehwelle (Sh2) gedreht wird,
**dadurch gekennzeichnet, dass**
die elektrische Leistungseinheit (8) ferner folgendes Merkmal aufweist:
einen Drehgeschwindigkeitsverstärkungsmechanismus (86), der dazu konfiguriert ist, eine Drehung der Elektromotordrehwelle (Sh1) zu dem Energiespeicherrotorkörper (82a) zu übertragen, um den Energiespeicherrotorkörper (82a) mit einer Drehgeschwindigkeit zu drehen, die höher ist als eine Drehgeschwindigkeit der Elektromotordrehwelle (Sh1);
ein Wert eines Verhältnisses der Drehgeschwindigkeit des Energiespeicherrotorkörpers (82a) zu der Drehgeschwindigkeit der Elektromotorrotorwelle (Sh1) konstant ist;
eine Kupplung (83), die dazu konfiguriert ist, zwischen einem Übertragungszustand und einem Abschaltzustand zu schalten, basierend auf einer Betätigung der Kupplungsbetätigungseinheit (92), die durch die Bedienperson durchgeführt wird,
wobei in dem Übertragungszustand die Drehung der Elektromotordrehwelle (Sh1) und die Drehung des Energiespeicherrotorkörpers (82a), der dazu konfiguriert ist, durch den Drehgeschwindigkeitsverstärkungsmechanismus (86) mit einer Drehgeschwindigkeit gedreht zu werden, die höher ist als eine Drehgeschwindigkeit der Elektromotordrehwelle (Sh1), zu einer Ausgangswelle (Sh5) übertragen werden, und in dem Abschaltzustand die Drehung der Elektromotordrehwelle (Sh1) und die Drehung des Energiespeicherrotorkörpers (82a), der dazu konfiguriert ist, durch den Drehgeschwindigkeitsverstärkungsmechanismus (86) mit einer Drehgeschwindigkeit gedreht zu werden, die höher ist als eine Drehgeschwindigkeit der Elektromotordrehwelle (Sh1), daran gehindert werden, zu der Ausgangwelle (Sh5) übertragen zu werden; und
die Ausgangswelle (Sh5) dazu konfiguriert ist, das Antriebsrad (4) zu drehen, wobei die Ausgangswelle (Sh5) dazu konfiguriert ist, mit der Kupplung (83) in dem Übertragungszustand durch die Drehung der Elektromotordrehwelle (Sh1) und die Drehung des Energiespeicherrotorkörpers (82a) gedreht zu werden, der dazu konfiguriert ist, durch den Drehgeschwindigkeitsverstärkungsmechanismus (86) mit einer Drehgeschwindigkeit gedreht zu werden, die höher ist als eine Drehgeschwindigkeit der Elektromotordrehwelle (Sh1).

2. Die elektrische Leistungseinheit (8) gemäß Anspruch 1, die ferner einen Geschwindigkeitsverringerungsmechanismus (87) aufweist, der dazu konfiguriert ist, eine Drehung von der Elektromotordrehwelle (Sh1) zu der Ausgangswelle (Sh5) zu übertragen, während eine Drehgeschwindigkeit reduziert wird, so dass eine Drehgeschwindigkeit der Ausgangswelle (Sh5) unter eine Drehgeschwindigkeit der Elektromotordrehwelle (Sh1) fällt, und dazu konfiguriert ist, eine Drehung von der Energiespeicherrotordrehwelle (Sh2) zu der Ausgangswelle (Sh5) zu übertragen, während eine Drehgeschwindigkeit reduziert wird, so dass die Drehgeschwindigkeit der Ausgangswelle (Sh5) unter eine Drehgeschwindigkeit der Energiespeicherrotordrehwelle (Sh2) fällt.

3. Die elektrische Leistungseinheit (8) gemäß Anspruch 1 oder Anspruch 2, bei der weder der Energiespeicherrotor (82) noch der Drehgeschwindigkeitsverstärkungsmechanismus (86) auf einem Drehübertragungsweg positioniert sind, der den Elektromotor (81) und die Kupplung (83) miteinander koppelt.

4. Die elektrische Leistungseinheit (8) gemäß einem der Ansprüche 1 bis 3, bei der
die Energiespeicherrotordrehwelle (Sh2) und die Elektromotordrehwelle (Sh1) sich in einer ersten Richtung (Ir) erstrecken und
eine Drehrichtung der Elektromotordrehwelle (Sh1) entgegengesetzt zu einer Drehrichtung des Energiespeicherrotorkörpers (82a) ist.

5. Die elektrische Leistungseinheit (8) gemäß Anspruch 3, bei der die Energiespeicherrotordrehwelle (Sh2) und die Elektromotordrehwelle (Sh1) sich in einer ersten Richtung (Ir) erstrecken und
die Energiespeicherrotordrehwelle (Sh2) und die Elektromotordrehwelle (Sh1) einander in der ersten Richtung (Ir) gesehen nicht überlappen.

6. Die elektrische Leistungseinheit (8) gemäß Anspruch 5, bei der
die Kupplung (83) eine Kupplungsdrehwelle (Sh4), die sich in der ersten Richtung (Ir) erstreckt, und eine Kupplungsscheibe (83a) umfasst,
die Kupplungsscheibe (83a) dazu konfiguriert ist, sich zusammen mit der Kupplungsdrehwelle (Sh4) mit der Kupplung (83) in dem Übertragungszustand zu drehen, und die Kupplungsscheibe (83a) dazu konfiguriert ist, daran gehindert zu werden, mit der Kupplung (83) in dem Abschaltzustand gedreht zu werden, und
die Energiespeicherrotordrehwelle (Sh2), die Elektromotordrehwelle (Sh1) und die Kupplungsdrehwelle (Sh4), in der ersten Richtung (Ir) gesehen, in dieser Reihenfolge in einer zweiten Richtung (fb) angeordnet sind, die orthogonal zu der ersten Richtung (Ir) ist.

7. Die elektrische Leistungseinheit (8) gemäß einem der Ansprüche 5 bis 6, bei der
die Energiespeicherrotordrehwelle (Sh2) und die Elektromotordrehwelle (Sh1) sich in der ersten Richtung (Ir) erstrecken und
eine Drehrichtung der Elektromotordrehwelle (Sh1) entgegengesetzt zu einer Drehrichtung des Energiespeicherrotorkörpers (82a) ist.

8. Die elektrische Leistungseinheit (8) gemäß einem der Ansprüche 5 bis 7, bei der
die erste Richtung (Ir) eine Links-Rechts-Richtung des Fahrzeugkörpers ist.

9. Die elektrische Leistungseinheit (8) gemäß einem der Ansprüche 1 bis 8, bei der
der Elektromotor (81) ferner folgende Merkmale umfasst:
einen Rotor (81a), der auf der Elektromotordrehwelle (Sh1) getragen wird und der sich zusammen mit der Elektromotordrehwelle (Sh1) dreht;
und einen Elektromotorkörper (81b), der den Rotor (81a) aufnimmt,
die Elektromotordrehwelle (Sh1) einen ersten vorstehenden Abschnitt (Sh1a) umfasst, der von dem Elektromotorkörper (81b) vorsteht, und
die Kupplung (83) und der Drehgeschwindigkeitsverstärkungsmechanismus (86) mit dem ersten vorstehenden Abschnitt (Sh1a) verbunden sind.

10. Die elektrische Leistungseinheit (8) gemäß Anspruch 1, bei der
der Elektromotor (81) ferner folgende Merkmale umfasst:
einen Rotor (81a), der auf der Elektromotordrehwelle (Sh1) getragen wird und der sich zusammen mit der Elektromotordrehwelle (Sh1) dreht;
und einen Elektromotorkörper (81b), der den Rotor (81a) aufnimmt,
die Elektromotordrehwelle (Sh1) einen ersten vorstehenden Abschnitt (Sh1a) und einen zweiten vorstehenden Abschnitt (Sh1b) umfasst, die von dem Elektromotorkörper (81b) vorstehen,
die Elektromotordrehwelle ein erstes Ende (Ta) und ein zweites Ende (Tb) aufweist,
der erste vorstehende Abschnitt (Sh1a) das erste Ende (Ta) umfasst,
der zweite vorstehende Abschnitt (Sh1b) das zweite Ende (Tb) umfasst,
der Drehgeschwindigkeitsverstärkungsmechanismus (86) mit dem zweiten vorstehenden Abschnitt (Sh1b) verbunden ist und
die Kupplung mit dem ersten vorstehenden Abschnitt (Sh1a) verbunden ist.

11. Ein Grätschsitz-Elektrofahrzeug (1), das folgende Merkmale aufweist:
die elektrische Leistungseinheit (8), die in einem der Ansprüche 1 bis 10 beschrieben ist;
einen Fahrzeugkörper (2);
ein Antriebsrad (4), das auf dem Fahrzeugkörper (2) getragen wird;
eine Leistungsquelle (9);
eine Beschleunigerbetätigungseinheit (90), die dazu konfiguriert ist, durch die Bedienperson betätigt zu werden;
eine Elektromotorsteuereinheit (10), die dazu konfiguriert ist, den Elektromotor (81) basierend auf der Betätigung der Beschleunigerbetätigungseinheit (90) zu steuern, die durch die Bedienperson durchgeführt wird; und
eine Kupplungsbetätigungseinheit (92), die dazu konfiguriert ist, durch die Bedienperson betätigt zu werden.

## Revendications

1. Unité d'énergie électrique (8) destinée à être utilisée dans un véhicule électrique à selle (1), le véhicule électrique à selle comportant:
une carrosserie de véhicule (2);
une roue motrice (4) supportée sur la carrosserie de véhicule (2);
une source d'énergie (9);
l'unité d'énergie électrique (8) comportant un moteur électrique (81) qui est configuré pour être entraîné lors de la réception d'énergie de la source d'énergie (9);
une unité d'actionnement d'accélérateur (90) configurée pour être actionnée par un opérateur;
une unité de commande de moteur électrique (10) configurée pour commander le moteur électrique (81) sur base d'un actionnement de l'unité d'actionnement d'accélérateur (90) effectué par l'opérateur; et
une unité d'actionnement d'embrayage (92) configurée pour être actionnée par l'opérateur, l'unité d'énergie électrique (8) comprenant:
le moteur électrique (81) comportant un arbre rotatif de moteur électrique (Sh1) et configuré pour faire tourner l'arbre rotatif de moteur électrique (Sh1) en réaction à une alimentation d'énergie de la source d'énergie (9); et
un rotor d'accumulation d'énergie (82) comportant un arbre rotatif de rotor d'accumulation d'énergie (Sh2) et un corps de rotor d'accumulation d'énergie (82a), le corps de rotor d'accumulation d'énergie (82a) étant configuré pour accumuler de l'énergie cinétique en étant mis en rotation autour de l'arbre rotatif de rotor d'accumulation d'énergie (Sh2),
**caractérisée par le fait que**
l'unité d'énergie électrique (8) comprend par ailleurs:
un mécanisme d'augmentation de la vitesse de rotation (86) configuré pour transmettre une rotation de l'arbre rotatif de moteur électrique (Sh1) au corps de rotor d'accumulation d'énergie (82a) pour faire tourner le corps de rotor d'accumulation d'énergie (82a) à une vitesse de rotation supérieure à une vitesse de rotation de l'arbre rotatif de moteur électrique (Sh1), une valeur d'un rapport entre la vitesse de rotation du corps de rotor d'accumulation d'énergie (82a) et la vitesse de rotation de l'arbre rotatif de moteur électrique (Sh1) étant constante;
un embrayage (83) configuré pour commuter entre un état de transmission et un état d'arrêt sur base d'un actionnement de l'unité d'actionnement d'embrayage (92) effectué par l'opérateur,
dans lequel, à l'état de transmission, la rotation de l'arbre rotatif de moteur électrique (Sh1) et la rotation du corps de rotor d'accumulation d'énergie (82a), qui est configuré pour être mis en rotation par le mécanisme d'augmentation de la vitesse de rotation (86) à une vitesse de rotation supérieure à une vitesse de rotation de l'arbre rotatif de moteur électrique (Sh1), sont transmises à un arbre de sortie (Sh5) et, à l'état d'arrêt, la rotation de l'arbre rotatif de moteur électrique (Sh1) et la rotation du corps de rotor d'accumulation d'énergie (82a), qui est configuré pour être mis en rotation par le mécanisme d'augmentation de la vitesse de rotation (86) à une vitesse de rotation supérieure à une vitesse de rotation de l'arbre rotatif de moteur électrique (Sh1), sont empêchées d'être transmises à l'arbre de sortie (Sh5); et
l'arbre de sortie (Sh5) étant configuré pour faire tourner la roue motrice (4), l'arbre de sortie (Sh5) étant configuré pour être mis en rotation, avec l'embrayage (83) à l'état de transmission, par la rotation de l'arbre rotatif de moteur électrique (Sh1) et la rotation du corps de rotor d'accumulation d'énergie (82a), qui est configuré pour être mis en rotation par le mécanisme d'augmentation de la vitesse de rotation (86) à une vitesse de rotation supérieure à une vitesse de rotation de l'arbre rotatif de moteur électrique (Sh1).

2. Unité d'énergie électrique (8) selon la revendication 1, comprenant par ailleurs un mécanisme de réduction de vitesse (87) configuré pour transmettre une rotation à l'arbre de sortie (Sh5) à partir de l'arbre rotatif de moteur électrique (Sh1) tout en réduisant une vitesse de rotation de sorte qu'une vitesse de rotation de l'arbre de sortie (Sh5) tombe au-dessous d'une vitesse de rotation de l'arbre rotatif de moteur électrique (Sh1), et configuré pour transmettre une rotation à l'arbre de sortie (Sh5) à partir de l'arbre rotatif de rotor d'accumulation d'énergie (Sh2) tout en réduisant une vitesse de rotation de sorte que la vitesse de rotation de l'arbre de sortie (Sh5) tombe au-dessous d'une vitesse de rotation de l'arbre rotatif de rotor d'accumulation d'énergie (Sh2).

3. Unité d'énergie électrique (8) selon la revendication 1 ou la revendication 2, dans laquelle ni le rotor d'accumulation d'énergie (82), ni le mécanisme d'augmentation de la vitesse de rotation (86) est positionné sur un trajet de transmission de rotation qui couple l'un à l'autre le moteur électrique (81) et l'embrayage (83).

4. Unité d'énergie électrique (8) selon l'une quelconque des revendications 1 à 3, dans laquelle
l'arbre rotatif de rotor d'accumulation d'énergie (Sh2) et l'arbre rotatif de moteur électrique (Sh1) s'étendent dans une première direction (lr), et
une direction de rotation de l'arbre rotatif de moteur électrique (Sh1) est opposée à une direction de rotation du corps de rotor d'accumulation d'énergie (82a).

5. Unité d'énergie électrique (8) selon la revendication 3, dans laquelle
l'arbre rotatif de rotor d'accumulation d'énergie (Sh2) et l'arbre rotatif de moteur électrique (Sh1) s'étendent dans une première direction (lr), et
l'arbre rotatif de rotor d'accumulation d'énergie (Sh2) et l'arbre rotatif de moteur électrique (Sh1) ne viennent pas en chevauchement l'un avec l'autre, tel que vu dans la première direction (lr).

6. Unité d'énergie électrique (8) selon la revendication 5, dans laquelle
l'embrayage (83) comporte un arbre rotatif d'embrayage (Sh4) s'étendant dans la première direction (lr) et un plateau d'embrayage (83a),
le plateau d'embrayage (83a) est configuré pour tourner ensemble avec l'arbre rotatif d'embrayage (Sh4) lorsque l'embrayage (83) est à l'état de transmission, et le plateau d'embrayage (83a) est configuré pour être empêché de tourner lorsque l'embrayage (83) est à l'état d'arrêt, et
l'arbre rotatif de rotor d'accumulation d'énergie (Sh2), l'arbre rotatif de moteur électrique (Sh1) et l'arbre rotatif d'embrayage (Sh4) sont, tels que vus dans la première direction (lr), disposés selon cet ordre dans une deuxième direction (fb) qui est orthogonale à la première direction (lr).

7. Unité d'énergie électrique (8) selon l'une quelconque des revendications 5 à 6, dans laquelle
l'arbre rotatif de rotor d'accumulation d'énergie (Sh2) et l'arbre rotatif de moteur électrique (Sh1) s'étendent dans la première direction (lr), et
une direction de rotation de l'arbre rotatif de moteur électrique (Sh1) est opposée à une direction de rotation du corps de rotor d'accumulation d'énergie (82a).

8. Unité d'énergie électrique (8) selon l'une quelconque des revendications 5 à 7, dans laquelle
la première direction (lr) est une direction gauche-droite de la carrosserie de véhicule.

9. Unité d'énergie électrique (8) selon l'une quelconque des revendications 1 à 8, dans laquelle
le moteur électrique (81) comporte par ailleurs: un rotor (81a) qui est supporté sur l'arbre rotatif de moteur électrique (Sh1) et qui tourne ensemble avec l'arbre rotatif de moteur électrique (Sh1); et un corps de moteur électrique (81b) qui reçoit le rotor (81a),
l'arbre rotatif de moteur électrique (Sh1) comporte une première partie en saillie (Sh1a) qui ressort du corps de moteur électrique (81b), et
l'embrayage (83) et le mécanisme d'augmentation de la vitesse de rotation (86) sont connectés à la première partie en saillie (Sh1a).

10. Unité d'énergie électrique (8) selon la revendication 1, dans laquelle
le moteur électrique (81) comporte par ailleurs: un rotor (81a) qui est supporté sur l'arbre rotatif de moteur électrique (Sh1) et qui tourne ensemble avec l'arbre rotatif de moteur électrique (Sh1); et un corps de moteur électrique (81b) qui reçoit le rotor (81a),
l'arbre rotatif de moteur électrique (Sh1) comporte une première partie en saillie (Sh1a) et une deuxième partie en saillie (Sh1b) qui ressortent du corps de moteur électrique (81b),
l'arbre rotatif de moteur électrique présente une première extrémité (Ta) et une deuxième extrémité (Tb),
la première partie en saillie (Sh1a) comporte la première extrémité (Ta),
la deuxième partie en saillie (Sh1b) comporte la deuxième extrémité (Tb),
le mécanisme d'augmentation de la vitesse de rotation (86) est connecté à la deuxième partie saillante (Sh1b), et
l'embrayage est connecté à la première partie en saillie (Sh1a).

11. Véhicule électrique à selle (1) comprenant:
l'unité d'énergie électrique (8) décrite dans l'une quelconque des revendications 1 à 10;
une carrosserie de véhicule (2);
une roue motrice (4) supportée sur la carrosserie de véhicule (2);
une source d'énergie (9);
une unité d'actionnement d'accélérateur (90) configurée pour être actionnée par l'opérateur;
une unité de commande de moteur électrique (10) configurée pour commander le moteur électrique (81) sur base de l'actionnement de l'unité d'actionnement d'accélérateur (90) effectué par l'opérateur; et
une unité d'actionnement d'embrayage (92) configurée pour être actionnée par l'opérateur.
